# EUROPÄISCHE PATENTANMELDUNG

(11) **EP 4 309 865 A1**
(43) Veröffentlichungstag der Anmeldung: **24.01.2024**
(21) Anmeldenummer: 22185586.9
(22) Anmeldetag: 18.07.2022
(51) Int. Cl.: B29C 45/00, C08L 69/00

(54) **VERFAHREN ZUR HERSTELLUNG EINES VERBUNDBAUTEILS MIT EINEM TRÄGER UMFASSEND EINE HYDROXYLKOMPONENTE**

(71) Anmelder: Covestro Deutschland AG, 51373 Leverkusen (DE)
(72) Erfinder: HERZBERG, Benjamin, 50767 Köln (DE); DELBECK, Michael, 47661 Issum (DE); MEYER, Alexander, 40489 Düsseldorf (DE); GRIMM, Thomas, 50765 Köln (DE); HAHN, Ruediger, 51399 Burscheid (DE); KLINKENBERG, Christoph, 51063 Köln (DE)
(74) Vertreter: Levpat

(57) **Zusammenfassung**

Die vorliegende Erfindung betrifft ein Verfahren zur Herstellung von Verbundbauteilen mit verbesserter Verbundhaftung, wobei diese einen Träger, umfassend Polycarbonat und mindestens eine im direkten Kontakt zu diesem Träger stehende Polyurethanschicht umfassen. Ebenso betrifft die Erfindung Verbundbauteile mit verbesserter Verbundhaftung sowie die Verwendung einer Zusammensetzung, enthaltend Polycarbonat und eine spezielle Hydroxylkomponente als Trägermaterial bei der Herstellung von Verbundteilen mit verbesserter Verbundhaftung.

## Beschreibung

Die vorliegende Erfindung betrifft ein Verfahren zur Herstellung von Verbundbauteilen mit verbesserter Verbundhaftung, wobei diese einen Träger, umfassend Polycarbonat und mindestens eine im direkten Kontakt zu diesem Träger stehende Polyurethanschicht umfassen. Ebenso betrifft die Erfindung Verbundbauteile mit verbesserter Verbundhaftung sowie die Verwendung einer Zusammensetzung, enthaltend Polycarbonat und eine spezielle Hydroxylkomponente als Trägermaterial bei der Herstellung von Verbundbauteilen mit verbesserter Verbundhaftung.

Verbundbauteile, umfassend einen Träger aus einem thermoplastischen Kunststoff und mindestens eine im direkten Kontakt zu diesem Träger stehende Polyurethanschicht, sind im Stand der Technik bekannt. Massive beschichtete Formteile zum Beispiel können nach Verfahren wie dem RIM-Verfahren (Reaction-Injection-Molding) hergestellt werden. Besonders vorteilhaft zur Herstellung von Verbundbauteilen mit Beschichtungen mit hoher Schichtdicke ist das sogenannte In-Mould-Coating (IMC) oder auch Direct-Coating (DC). Hier werden die Beschichtungskomponenten auf den entsprechenden Träger in einem Formwerkzeug aufgetragen und in der Werkzeugkavität ausgehärtet. Neben den oben genannten Anforderungen sind die großen Vorteile der IMC-Technik die schnellen Verarbeitungszeiten, ein geringer bis niedriger Verlust an Rohstoffen sowie die Herstellung eines beschichteten Spritzgussformteils (Verbundbauteils) inklusive Beschichtung in einem Arbeitsgang. Sowohl die mittels RIM-Verfahren als auch mittels IMC-Verfahren erhaltenen Verbundbauteile verfügen dabei über die mechanischen Eigenschaften des Trägermaterials, dessen Witterungsstabilität und Kratzfestigkeit jedoch durch die Polyurethanschicht verbessert wird. Hier ist es offensichtlich, dass die Gesamtperformance und Gesamtstabilität des Verbundbauteils auch durch die Haftung der Polyurethanschicht auf dem Träger bestimmt wird. Bei gängigen Verbundbauteilen, welche Polycarbonat als Trägermaterial umfassen, kommt es nach Belastungen wie dem Klimawechseltest oder Lagerungen häufig zu einem Haftungsverlust. Dadurch nimmt auch die Gesamtperformance des Verbundbauteils ab. Ein weiterer Vorteil der RIM- bzw. IMC-Verfahren ist es, dass über diese Verfahren spezielle Designs zugänglich werden, welche über andere Verfahren nicht erhalten werden können. Dies liegt insbesondere daran, dass die Beschichtung der Verbundbauteile relativ dick ausgestaltet werden kann und dabei gleichzeitig schnell abreagiert.

DE 196 50 854 C1 offenbart ein solches IMC-Verfahren zur Herstellung eines Mehrschicht-Kunststoffteils bei dem ein Kunststoff-Spritzgussteil mit mindestens einer Schicht aus einem 2-Komponenten-Duromer, vorzugsweise Polyurethan, beschichtet wird. Bei diesem Verfahren werden das Kunststoffteil und die Schicht aus 2-Komponenten-Duromer nacheinander zyklussynchron im selben Werkzeug gespritzt. Über den Einfluss der chemischen Natur des Trägermaterials und der Verfahrensparameter auf die Haftung zwischen Trägermaterial und mit diesem in Verbindung stehender Schicht des Verbundbauteils werden in der DE 196 50 854 C1 keine Hinweise gegeben.

WO 2006/072366 A1 beschreibt ein Verfahren zum Formen und Beschichten eines Substrats in einem Formwerkzeug mit wenigstens zwei Kavitäten. Das Verfahren umfasst die Schritte:
a) Formen eines Substrats in einer ersten Kavität des Formwerkzeugs,
b) das Einbringen des im vorangegangenen Schritt hergestellten Substrats in eine zweite Kavität des Formwerkzeugs und
c) Beschichten des Substrats in der zweiten Kavität mit einem Lack, wobei das Beschichten unter erhöhtem Druck erfolgt.

Auch in diesem Dokument steht die Haftung zwischen dem Trägermaterial und der Lackschicht nicht im Vordergrund.

In EP28990008A1 wird beschrieben, dass durch eine spezielle Oberflächenstrukturierung des Trägers die Haftung zur Polyurethanschicht verbessert werden kann. Ebenso ist es bekannt, dass die Verwendung von Primern oder eine spezielle Aktivierung des Trägermaterials zu einer verbesserten Haftung führen kann.

Die WO2011/015286 A1 betrifft die Bereitstellung eines verbesserten Verbunds zwischen dem Trägermaterial und der Polyurethanschicht mit der Maßgabe, dass keine Modifizierung der Oberfläche (insbesondere Primern oder eine Oberflächenaktivierung) des Trägers benötigt wird. Dabei wurde gefunden, dass die Verwendung eines geschäumten Trägermaterials sich positiv auf die Haftung zur Polyurethanschicht auswirkt.

In der WO2011/070044 A4 wird der Einfluss des Kautschukgehalts einer Zusammensetzung enthaltend Polycarbonat und ein kautschukmodifiziertes Vinyl(co)polymerisat als Trägermaterial auf die Verbundhaftung untersucht.

Die Verbesserung der Verbundhaftung wird in diesen Dokumenten entweder durch zusätzliche Schritte wie Aufbringen eines Primers, Oberflächenaktivierung, Oberflächenstrukturierung oder Schäumen des Trägermaterials oder durch das Hinzufügen von Additiven in die Zusammensetzung des Trägermaterials erzielt. Dies bedeutet, dass entweder ein zusätzlicher Schritt bei der Herstellung eines Verbundteils notwendig ist, welcher mit entsprechenden Kosten und Aufwand verbunden ist. Oder aber es wird eine speziell additivierte Zusammensetzung des Trägermaterials benötigt, wobei das Additiv Einfluss auf die mechanischen Eigenschaften sowie optischen Eigenschaften des resultierenden Bulk-Trägermaterials und damit auch resultierenden Verbundbauteils nimmt.

Ausgehend von diesem Stand der Technik lag der vorliegenden Erfindung die Aufgabe zu Grunde, mindestens einen Nachteil des Stands der Technik zu überwinden. Insbesondere lag der vorliegenden Erfindung die Aufgabe zu Grunde, ein Verbundbauteil mit einem verbesserten Verbund zwischen dem Trägermaterial, umfassend Polycarbonat, und der mindestens einen mit dem Trägermaterial unmittelbar in Kontakt stehenden Polyurethanschicht bereitzustellen. Dabei sollten bevorzugt keine zusätzlichen Schritte wie eine Modifizierung der Oberfläche beispielsweise durch Primer oder Oberflächenaktivierung notwendig sein. Ebenso sollte die Additivierung des Trägermaterials nur geringe Auswirkungen auf die mechanischen und optischen Bulk-Eigenschaften des Trägers und/oder des resultierende Verbundbauteils haben. Insbesondere sollte das Polyurethanrohstoffgemisch, welches zur Herstellung des Verbundbauteils verwendet wird, hochreaktiv sein (d. h. bevorzugt eine Formstandzeit von weniger als 150 s, bevorzugt 100 s aufweisen). Das verwendete Polyurethanrohstoffgemisch sollte des Weiteren bevorzugt Topfzeiten von höchstens 30 s, bevorzugt höchstens 10 s aufweisen. Ganz besonders bevorzugt sollte das Verbundbauteil über ein RIM- oder IMC-Verfahren, insbesondere ein IMC-Verfahren hergestellt werden.

Mindestens eine, bevorzugt alle der oben genannten Aufgaben wurden durch die vorliegende Erfindung gelöst. Überraschend wurde gefunden, dass, die Verwendung spezieller Hydroxylkomponenten im Trägermaterial dazu führt, dass eine verbesserte Verbundhaftung zwischen dem Trägermaterial und der Polyurethanschicht resultiert. Die spezielle Hydroxylkomponente reichert sich dabei jedoch überwiegend an der Oberfläche des Trägers an. Dadurch werden die Bulkeigenschaften des Trägers kaum von der Verwendung des zusätzlichen Additivs beeinflusst. Der resultierende Verbund haftet kraftschlüssig. Dies kann insbesondere durch die Prüfung mittels POSI Test (gemäß DIN EN ISO 4624:2016-08, Verwendung des Verfahrens B (8.4.2) unter Angabe des schadhaftesten Fehlerbildes) beurteilt werden. Dabei beträgt die initiale Haftung des erfindungsgemäßen Verbundbauteils bevorzugt mindestens 5 MPa gemessen mittels oben genanntem POSI Test. Ebenso beträgt die Haftung des erfindungsgemäßen Verbundbauteils nach Hydrolysetest (d. h. nach 72 h Lagerung bei 90 ± 2 °C und 95 ± 3 % relative Luftfeuchtigkeit im Klimaschrank (Bildung von Wassertropfen auf dem Bauteil ist durch geeignete Positionierung im Klimaschrank zu vermeiden)) bevorzugt mindestens 2 MPa gemessen mittels oben genanntem POSI Test. Die Verbund-Haftung zwischen dem Träger aus Polycarbonat-Zusammensetzung und der Polyurethan-Beschichtung in den erfindungsgemäßen Verbundbauteilen kann ebenso an aus dem Bauteil entnommenen Streifenproben mit einer Breite von 20 mm in einem Rollenschälversuch gemäß DIN 53357:1982-10 mit einer Prüfgeschwindigkeit von 100 mm/min gemessen werden.

Der Verbund zeigt eine Verbesserung insbesondere gegenüber einem vergleichbaren System, wobei jedoch das Polycarbonat der Komponente A) kein Additiv mit mindestens einer Hydroxylgruppe, bevorzugt keine spezielle Hydroxylkomponente (I) aufweist.. Ohne an eine Theorie gebunden sein zu wollen, wird angenommen, dass die spezielle Hydroxylkomponente (I) auf Grund ihrer chemischen Natur als Haftvermittler agieren kann. Die hydrophilen OH-Gruppen sowie gegebenenfalls, falls vorhanden auch die hydrophoben Kohlenwasserstoffketten (insbesondere, wenn sie langkettig sind) führen dazu, dass sich diese während der Bildung des Trägers und/oder nach der Bildung des Trägers an der Oberfläche des Trägers anreichern. Gleichzeitig führen die hydrophoben Kohlenwasserstoffgruppen zu einer festen Verankerung in und an dem Trägermaterial (insbesondere langkettige Kohlenwasserstoffe können sich auf für den Fachmann bekannte Weise mit dem Trägermaterial verhaken und somit auch ohne Ausbildung einer kovalenten Bindung eine belastbare Verbindung bilden). Hierbei kann auf die Beweglichkeit und somit die Tendenz der Oberflächenanreicherung zum Beispiel durch den Abkühlungsprozess zum Träger hin Einfluss genommen werden. Je wärmer die Schmelze noch ist, desto beweglicher sind die Moleküle. Auf die Temperatur der Schmelze kann beispielsweise durch Erhöhung der Gesamtschmelzetemperatur im Verfahren oder die Werkzeugtemperatur Einfluss genommen werden. Gleichzeitig führt diese Oberflächenanreicherung dazu, dass die spezielle Hydroxylkomponente im Bulk des Trägermaterials abgereichert wird. Dies bewirkt, dass die Hydroxylkomponente kaum Einfluss auf die Bulkeigenschaften des Trägers nimmt. Zum anderen führt dies aber auch dazu, dass die Menge der Hydroxylkomponente gering gehalten werden kann, da sie effektiv nur dort genutzt wird, wo sie auch benötigt wird. Dies reduziert zusätzlich die Kosten.

Ohne an eine Theorie gebunden sein zu wollen, wird davon ausgegangen, dass insbesondere die OH-Gruppen, welche nun an der Oberfläche des gebildeten Trägers vorhanden sind, für eine Reaktion mit den Komponenten des Polyurethanrohstoffgemisches zur Verfügung stehen. Dadurch kommt es zur Ausbildung von Bindungen, bevorzugt kovalenten Bindungen, zwischen der Hydroxylkomponente an der Oberfläche des Trägers und der sich bildenden Polyurethanschicht. Dies führt zu einem guten Verbund im resultierenden Verbundbauteil. Insbesondere in RIM- und/oder IMC-Verfahren ist dieser Effekt besonders ausgeprägt, da dort Polyurethanrohstoffgemische eingesetzt werden, welche in der Regel einen hohen Isocyanatanteil aufweisen. Dadurch kann die beschriebene Reaktion besonders effektiv ablaufen.

Zusätzlich wurde gefunden, dass die Verwendung eines Polycarbonats mit einem definierten phenolischen OH-Anteil zusätzlich die Verbundhaftung verbessert. Es kommt zu einer synergistischen Wirkung. Dabei wurde gefunden, dass der speziell definierte Bereich an OH-Gruppen im verwendeten Polycarbonat zum einen die Verbundhaftung effektiv verbessert, zum anderen aber noch gering genug ist, dass das resultierende Verbundbauteil eine gute Thermostabilität aufweist. Ohne an eine Theorie gebunden sein zu wollen, wird angenommen, dass insbesondere die weiteren zusätzlichen OH-Gruppen, welche an der Oberfläche des gebildeten Trägers vorhanden sind, für eine Reaktion mit den Komponenten des Polyurethanrohstoffgemisches zur Verfügung stehen. Die Kombination von kovalenten Bindungen zwischen Polycarbonat und Polyurethan und den fest im Trägermaterial verankerten, aber dennoch flexibleren Bindungen, zwischen der abreagierten Hydroxylverbindung und dem Polyurethan führen insgesamt zu einem guten Verbund.

Erfindungsgemäße wird daher ein Verfahren zur Herstellung eines Verbundbauteils bereitgestellt, umfassend
a) einen Träger aus einer thermoplastischen Zusammensetzung, und
b) mindestens eine in direktem Kontakt zum Träger stehende Polyurethanschicht, umfassend die Schritte
   (i) Einspritzen einer Schmelze der thermoplastischen Zusammensetzung
      in eine Werkzeugkavität und nachfolgende Abkühlung, um den Träger zu bilden, wobei die thermoplastische Zusammensetzung
      A) mindestens ein aromatisches Polycarbonat,
      B) mindestens eine Hydroxylkomponente (I), umfassend mindestens drei Kohlenstoffatome und mindestens drei Hydroxylgruppen, wobei mindestens eine dieser mindestens drei Hydroxylgruppen jeweils mit einer aliphatischen gesättigten oder ungesättigten, linearen, cyclischen oder verzweigten C₁-C₃₂-Carbonsäure oder Benzoesäure verestert ist und mindestens eine dieser mindestens drei Hydroxylgruppen als freie Hydroxylgruppe vorliegt, und
      C) gegebenenfalls mindestens ein Polymeradditiv, enthält,
   (ii) Vergrößern der Kavität des Werkzeugs und dadurch Erzeugung eines Spaltraums oder Einbringen des Trägers in eine zweite Kavität des Werkzeugs, welche hinsichtlich ihrer Hohlformmaße größer ist als die erste Kavität, wodurch ein Spaltraum erzeugt wird,
   (iii) Einspritzen eines reaktiven Polyurethanrohstoffgemisch enthaltend
      - mindestens eine Polyisocyanat-Komponente,
      - mindestens eine polyfunktionelle H-aktive Verbindung, und
      - optional mindestens ein Polyurethan-Additiv und/oder Prozesshilfsstoff
      in den Spaltraum zwischen dem Träger und der Werkzeugoberfläche, wobei das Polyurethanrohstoffgemisch im Kontakt mit der Oberfläche des Trägers zu einer kompakten Polyurethanschicht oder zu einer Polyurethanschaumschicht auspolymerisiert,
   (iv) Entformen des Verbundbauteil aus der Werkzeugkavität.

Dabei ist es bevorzugt, dass die Verfahrensschritte (i) bis (iv) unmittelbar aufeinander folgen. In diesem Fall können jedoch die Verfahrensschritte (i), (ii) und/oder (iii), bevorzugt (ii) und (iii) mehrfach durchlaufen werden (müssen aber nicht). Wenn Verfahrensschritt (i) mehrfach durchgeführt wird, so ist es bevorzugt, dass die verwendete thermoplastische Zusammensetzung sich im zweiten und ggf. auch jedem weiteren Verfahrensschritt (i) von der thermoplastischen Zusammensetzung des ersten Verfahrensschritts (i) unterscheidet. Dabei ist es jedoch erforderlich, dass das Trägermaterial, welches aus Schritt (i) resultiert und welches in Verfahrensschritt (iii) in unmittelbaren Kontakt zum Polyurethanrohstoffgemisch steht, die erfindungsgemäße thermoplastische Zusammensetzung ist, welche den definierten phenolischen OH-Gehalt aufweist. Durch die unmittelbare Abfolge der Verfahrensschritte (i) bis (iv) wird verhindert, dass die Temperatur des Werkstücks während des Prozesses auf Raumtemperatur abkühlt. Hierdurch wird eine Reduktion der Herstellungszeiten und eine höhere Energieeffizienz des Gesamtverfahrens erreicht.

Die Verfahrensschritte (ii) und (iii) können unter Variation des Polyurethansystems mindestens einmal wiederholt werden, wobei nur auf einer oder beiden Seiten des Trägers ein oder mehrere Polyurethanschichten aufgebracht werden, so dass ein Verbundbauteil aus thermoplastischem Träger und mindestens zwei gleichen oder unterschiedlichen PU-Komponenten mit gegebenenfalls auch mehr als zweischichtigem Aufbau resultiert. Werden die Verfahrensschritte (ii) und (iii) wiederholt, so ist es für den Fachmann ersichtlich, dass zumindest die zweite Polyurethanschicht dann nicht mehr in unmittelbarem Kontakt zum Träger steht. In Verfahrensschritt (ii) wird ein Spaltraum erzeugt. Zur Erzeugung des Spaltraums in Verfahrensschritt (ii) kann entweder das Spritzgusswerkzeug geöffnet und nachfolgend eine Hälfte der Spritzgusswerkzeugkavität durch eine neue Hälfte mit größeren Hohlformmaßen ausgetauscht, oder das Bauteil von der ersten Werkzeugkavität in eine zweite, hinsichtlich seiner Hohlformmaße größeren Kavität desselben oder eines zweiten Werkzeugs umgesetzt, oder die erste Kavität um ein Spaltmaß geöffnet werden. Verfahrensschritt (ii) umfasst somit die Vergrößern der Kavität des Werkzeugs und dadurch Erzeugung eines Spaltraums oder Einbringen des Trägers in eine zweite Kavität des Werkzeugs, welche hinsichtlich ihrer Hohlformmaße größer ist als die erste Kavität, wodurch ein Spaltraum erzeugt wird.. Bevorzugt umfasst Verfahrensschritt (ii) das Einbringen des Trägers in eine zweite Kavität des Werkzeugs, welche hinsichtlich ihrer Hohlformmaße größer ist als die erste Kavität, wodurch ein Spaltraum erzeugt wird.

Das Umsetzen des Substrats im Verfahrensschritt (ii) kann nach bekannten Verfahren, wie sie beispielsweise beim Mehrfarbenspritzgießen angewendet werden, erfolgen. Typische Verfahren sind einerseits das Umsetzen mit Drehteller, Wendeplatte, Schiebekavität oder Indexplatte oder vergleichbare Verfahren, bei denen das Substrat auf einem Kern verbleibt. Verbleibt das Substrat zum Umsetzen auf dem Kern, hat dies den Vorteil, dass die Lage auch nach dem Umsetzen passgenau definiert ist. Andererseits sind aus dem Stand der Technik Verfahren zum Umsetzen eines Substrats bekannt, bei denen das Substrat, z.B. mit Hilfe eines Handhabungssystems, aus einer Kavität entnommen und in eine andere Kavität eingelegt wird. Das Umsetzen mit Entnahme des Substrats bietet größeren Gestaltungsspielraum bei der Beschichtung, z.B. bei der Generierung eines Umbugs oder maskierter Bereiche.

Bevorzugt ist das erfindungsgemäße Verfahren dadurch gekennzeichnet, dass der Träger zumindest an einer Stelle eine Wanddicke von 0,5 mm bis 10 mm, bevorzugt 1 mm bis 9 mm, besonders bevorzugt 1,5 mm bis 6,5 mm und ganz besonders bevorzugt 2 mm bis 5 mm aufweist.

Die Polyurethanschicht kann beispielsweise ein PU-Lack, ein PU-Schaum oder eine kompakte PU-Haut darstellen. All diese Ausführungen werden erfindungsgemäß unter den Begriff "Polyurethanschicht" subsumiert. Die mit diesem Verfahren hergestellten Polyurethanschichten können beispielsweise Dicken von 1 µm bis zu 20 cm, bevorzugt 5 µm bis 15 cm, besonders bevorzugt 10 µm bis 10 cm aufweisen. Dabei ist das erfindungsgemäße Verfahren bevorzugt dadurch gekennzeichnet, dass die Polyurethanschicht eine Schichtdicke von 1 - 1500 µm, bevorzugt größer 1,5 mm - 10 mm, besonders bevorzugt größer 1 cm - 20 cm, ebenso bevorzugt 500 µm bis 1 mm aufweist. In all diesen Ausgestaltungen kann die Polyurethanschicht auch geschäumt sein.

Das reaktive Polyurethanrohstoffgemisch hat bevorzugt eine Kennzahl von > 90 bis < 140, vorzugsweise > 100 bis < 120, und besonders bevorzugt von 105 bis 115. Die Kennzahl ist definiert als prozentuales Verhältnis der tatsächlich eingesetzten Isocyanat-Menge zur berechneten stöchiometrischen Menge bei kompletter Polyol-Umsetzung (d. h. für die Umsetzung der OH-Äquivalente berechnete Menge an Isocyanat-Gruppen), d.h. Kennzahl = ((Funktionalität der Isocyanate ^{∗} Stoffmenge der gesamten Isocyanate) / (Funktionalität der Alkohole ^{∗} Stoffmenge der gesamten Hydroxygruppen)) ^{∗} 100.

Bevorzugt wird die mit der thermoplastischen Polymerzusammensetzung in Kontakt stehende Oberfläche des Spritzgusswerkzeuges im Verfahrensschritt (iii) auf eine Temperatur im Bereich von 50 bis 140 °C, bevorzugt 60 bis 100 °C und besonders bevorzugt 65 bis 95°C, bevorzugt 60 bis 85°C, und besonders bevorzugt 60 bis 80°C temperiert. Diese Werte gelten insbesondere, wenn das Trägermaterial als Komponente A) ein Polycarbonat auf Basis von Bisphenol A umfasst. Sollte ein anderes (Co)Polycarbonat verwendet werden, ist der Fachmann in der Lage auf Basis der Glasübergangstemperatur dieses anderen (Co)Polycarbonats entsprechend bevorzugte Temperaturen anzupassen. Ebenso bevorzugt wird die mit dem reaktiven Polyurethangemisch in Kontakt stehende Oberfläche des Spritzgusswerkzeuges im Verfahrensschritt (iii) auf eine Temperatur im Bereich 50 bis 160°C, bevorzugt 70 bis 120°C, weiter bevorzugt 80 bis 110°C, und besonders bevorzugt 90 bis 100 °C temperiert.

Weiterhin bevorzugt ist im Verfahrensschritt (iii) die Temperatur der polyurethanseitigen Werkzeugkavität mindestens 10°C, bevorzugt mindestens 15°C, besonders bevorzugt mindestens 20°C höher als die Temperatur der trägerseitigen (thermoplastseitigen) Werkzeugkavität. Es ist aber auch möglich, Verfahrensschritt (iii) ohne Temperaturdelta zwischen der polyurethanseitigen und der trägerseitigen Werkzeugkavität durchzuführen.

Ebenso ist es bevorzugt, wenn Auspolymerisation in Verfahrensschritt (iii) unter erhöhtem Druck stattfindet. Insbesondere ist es bevorzugt, wenn der Druck in Verfahrensschritt (iii) im Bereich von 10 bis 150 bar, bevorzugt 10 bis 90 bar (10.000 bis 90 000 hPa) liegt. Ebenso ist es bevorzugt, dass in Verfahrensschritt (iii) das reaktive Polyurethanrohstoffgemisch mit Hockdruck- oder Niederdruckmaschinen eingebracht wird. Vor dem Entformen des Werkstücks in den Schritten (ii) und (iv) wird das Werkstück bis zur Formstabilität abgekühlt.

Die erfindungsgemäß hergestellten Verbundbauteile eignen sich bevorzugt für die Verwendung als Innen- oder Außenbauteil eines Schienen-, Luftfahrt- oder Kraftfahrzeuges.

### Komponente A

Erfindungsgemäß geeignete aromatische Polycarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 077 934). Aromatische Polycarbonate der Komponente A) im Sinne der vorliegenden Erfindung sind sowohl Homopolycarbonate als auch Copolycarbonate und/oder Polyestercarbonate; die Polycarbonate können in bekannter Weise linear oder verzweigt sein. Erfindungsgemäß können auch Mischungen von Polycarbonaten verwendet werden.

Ein Polycarbonat bzw. ein Material "auf Basis von" Polycarbonat gemäß der vorliegenden Erfindung ist ein thermoplastisches Material, welches bevorzugt mindestens 50 Gew.-%, besonders bevorzugt mindestens 60 Gew.-% und besonders bevorzugt mindestens 70 Gew.-% Polycarbonat umfasst.

Ein Teil, bis zu 80 Mol-%, vorzugsweise von 20 Mol-% bis zu 50 Mol-%, der CarbonatGruppen in den erfindungsgemäß eingesetzten Polycarbonaten können durch aromatische Dicarbonsäureester-Gruppen ersetzt sein. Derartige Polycarbonate, die sowohl Säurereste der Kohlensäure als auch Säurereste von aromatischen Dicarbonsäuren in die Molekülkette eingebaut enthalten, werden als aromatische Polyestercarbonate bezeichnet. Sie werden im Rahmen der vorliegenden Erfindung unter dem Oberbegriff der thermoplastischen, aromatischen Polycarbonate subsumiert.

Der Ersatz der Carbonatgruppen durch die aromatischen Dicarbonsäureestergruppen verläuft im Wesentlichen stöchiometrisch und auch quantitativ und das Molverhältnis der Reaktionspartner spiegelt sich daher auch im fertigen Polyestercarbonat wieder. Die aromatischen Dicarbonsäureestergruppen können sowohl statistisch als auch blockweise eingebaut werden. Polyestercarbonate sind unter dem Begriff "Polycarbonate" im Sinne der vorliegenden Erfindung umfasst.

Im Kontext der vorliegenden Erfindung bezieht sich der Begriff "Alkyl" bzw. "Alkylgruppe" bevorzugt und soweit nicht anders angegeben auf eine Alkanstruktur, von der ein Wasserstoffatom entfernt wurde. Die Alkylgruppe gemäß der vorliegenden Erfindung kann linear oder verzweigt sein. Sie ist gesättigt und umfasst daher nur Einfachbindungen zwischen den benachbarten Kohlenstoffatomen. Bevorzugt umfasst die Alkylgruppe Methyl, Ethyl, n-Propyl, Isopropyl, n-Butyl, sec-Butyl, tert-Butyl, n-Pentyl, 1-Methylbutyl, 2-Methylbutyl, 3-Methylbutyl, Neopentyl, 1-Ethylpropyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, 1-Ethyl-2-methylpropyl und dergleichen. Die Auswahl dieser Strukturen kann begrenzt sein, wenn im Rahmen der vorliegenden Erfindung die Anzahl der Kohlenstoffatome anders definiert wird.

Im Kontext der vorliegenden Erfindung bezieht sich der Begriff "Alkylen" bzw. "Alkylengruppe" bevorzugt und soweit nicht anders angegeben auf eine verbrückende Alkanstruktur, von der zwei Wasserstoffatome von unterschiedlichen Kohlenstoffatomen entfernt wurden. In diesem Kontext können die zwei Wasserstoffatome, die von den zwei Kohlenstoffatomen entfernt wurden, von beliebigen Kohlenstoffatomen in der Alkanstruktur entfernt werden. Dies bedeutet, dass die beiden Kohlenstoffatome benachbart sein können, aber nicht zwingend benachbart sein müssen. Eine Alkylengruppe kann linear oder verzweigt sein. Sie ist gesättigt. Wenn die Alkylengruppe nur ein Kohlenstoffatom umfasst, handelt es sich um eine Methylengruppe (-CH₂-), welche mit dem Rest des Moleküls über zwei Einfachbindungen verbunden ist. Bevorzugt umfasst die Alkylengruppe Methylen, Ethylen, n-Propylen, iso-Propylen, n-Butylen, sec-Butylen, tert-Butylen, n-Pentylen, 1-Methylbutylen, 2-Methylbutylen, 3-Methylbutylen, Neopentylen, 1-Ethylpropylen, n-Hexylen, 1,1-Dimethylpropylen, 1,2-Dimethylpropylen, 1,2-Dimethylpropylen, 1-Methylpentylen, 2-Methylpentylen, 3-Methylpentyln, 4-Methylpentylen, 1,1-Dimethylbutylen, 1,2-Dimethylbutylen, 1,3-Dimethylbutylen, 2,2-Dimethylbutylen, 2,3-Dimethylbutylen, 3,3-Dimethylbutylen, 1-Ethylbutylen, 2-Ethylbutylen, 1,1,2-Trimethylpropylen, 1,2,2-Trimethylpropylen, 1-Ethyl-1-methylpropylen, 1-Ethyl-2-methylpropylen, 1-Ethyl-2-methylpropylen und dergleichen. Die Auswahl dieser Strukturen kann begrenzt sein, wenn im Rahmen der vorliegenden Erfindung die Anzahl der Kohlenstoffatome anders definiert wird.

Im Kontext der vorliegenden Erfindung bezieht sich der Begriff "Alkyliden" bzw. "Alkylidengruppe" bevorzugt und soweit nicht anders angegeben auf eine verbrückende Alkanstruktur, bei der zwei Wasserstoffatome von demselben Kohlenstoffatom entfernt wurden. Bevorzugt umfasst die Alkylidengruppe iso-Propyliden, n-Propyliden, iso-Heptyliden und dergleichen.

Bevorzugte Polyestercarbonate werden durch Formel (w) dargestellt 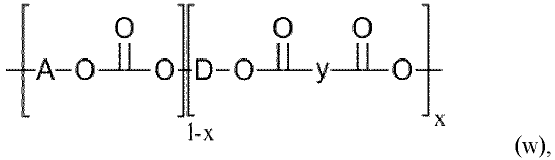 in der

A jeder Wiederholungseinheit unabhängig voneinander für eine aliphatische oder aromatische divalente Gruppe steht, z.B. eine aromatische divalente Gruppe mit 6 bis 30 Kohlenstoffatomen, die einen oder mehrere aromatische Ringe enthalten kann, substituiert sein kann und aliphatische oder cycloaliphatische Reste oder Alkylaryle oder Heteroatome als verbrückende Strukturen enthalten kann, wie eine Struktur der Formel (wi) 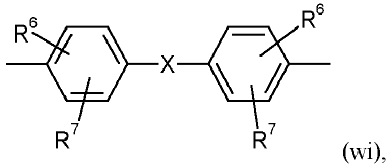 in der
- R⁶ und R⁷: unabhängig voneinander für H, C₁- bis C₁₈-Alkyl-, C₁- bis C₁₈-Alkoxy, Halogen wie Cl oder Br oder für jeweils gegebenenfalls substituiertes Aryl- oder Aralkyl, bevorzugt für H oder C₁- bis C₁₂-Alkyl, besonders bevorzugt für H oder C₁- bis C₈-Alkyl und ganz besonders bevorzugt für H oder Methyl stehen, und
- X: für eine Einfachbindung, -SO₂-, -CO-, -O-, -S-, C₁- bis C₆-Alkylen, C₂- bis C₅-Alkyliden oder C₅- bis C₆-Cycloalkyliden, welches mit C₁- bis C₆-Alkyl, vorzugsweise Methyl oder Ethyl, substituiert sein kann, ferner für C₆- bis C₁₂-Arylen, welches gegebenenfalls mit weiteren Heteroatome enthaltenden aromatischen Ringen kondensiert sein kann, steht
oder - bezogen auf A - eine aliphatische divalente Gruppe, die cyclisch, linear oder verzweigt sein kann und 2 bis 30 Kohlenstoffatome aufweist, die durch mindestens ein Heteroatom unterbrochen sein kann und mehr als einen Zyklus umfassen kann, wie z. B. Struktur (wii) 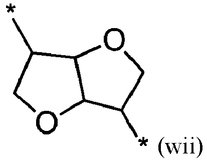 oder - bezogen auf A - eine lineare Alkylengruppe mit 2 bis 22 Kohlenstoffatomen, vorzugsweise 2 bis 4 Kohlenstoffatomen, die durch mindestens ein Heteroatom unterbrochen sein kann, oder eine verzweigte Alkylengruppe mit 4 bis 20 Kohlenstoffatomen, vorzugsweise 5 bis 15 Kohlenstoffatomen, die durch mindestens ein Heteroatom oder eine Cycloalkylengruppe mit 4 bis 20 Kohlenstoffatomen, vorzugsweise 5 bis 15 Kohlenstoffatomen, unterbrochen sein kann, die durch mindestens ein Heteroatom unterbrochen sein kann und die mehr als einen Zyklus enthalten kann,
D in jeder Wiederholungseinheit unabhängig voneinander für A oder eine aromatische oder cycloaliphatische zweiwertige Gruppe, vorzugsweise ein gegebenenfalls substituiertes Phenylen oder ein gegebenenfalls substituiertes Cyclohexylen steht;
y in jeder Wiederholungseinheit unabhängig voneinander für eine aliphatische divalente Gruppe, die cyclisch, linear oder verzweigt sein kann und 2 bis 30 Kohlenstoffatome aufweist, die durch mindestens ein Heteroatom unterbrochen sein kann und mehr als einen Zyklus oder eine aromatische divalente Gruppe, vorzugsweise eine lineare aliphatische divalente Gruppe mit 2 bis 30 Kohlenstoffatomen, eine verzweigte aliphatische divalente Gruppe mit 2 bis 30 Kohlenstoffatomen, eine cycloaliphatische divalente Gruppe mit 6 bis 30 Kohlenstoffatomen, die mehr als einen Zyklus oder eine aromatische divalente Gruppe mit 6 bis 30 Kohlenstoffatomen aufweisen kann, besonders bevorzugt für ein gegebenenfalls substituiertes Cyclohexylen, eine aliphatische lineare Gruppe mit 2 bis 18 Kohlenstoffatomen oder ein gegebenenfalls substituiertes Phenylen
0 < x < 1.

Besonders bevorzugte Polyestercarbonate sind solche auf Basis der Kombination der folgenden Diole und Disäuren: Bisphenol A und Sebacinsäure; Bisphenol A und Isophthalsäure, Terephthalsäure und/oder Phthalsäure und gegebenenfalls Resorcin; Isosorbid- und Cyclohexandicarbonsäure und gegebenenfalls weitere Diole oder Disäuren.

Für die Herstellung der Polycarbonate geeignete Dihydroxyarylverbindungen sind beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α-α'-Bis-(hydroxyphenyl)-diisopropylbenzole, Phtalimidine abgeleitet von Isatin- oder Phenolphthaleinderivaten sowie deren kernalkylierte, kernarylierte und kernhalogenierte Verbindungen oder 9,9-Bis(4-hydroxyphenyl)fluoren.

Bevorzugte Dihydroxyarylverbindungen sind 4,4'-Dihydroxydiphenyl, 2,2-Bis-(4-hydroxyphenyl)-propan (Bisphenol A), 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, Dimethyl-Bisphenol A, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, 9,9-Bis(4-hydroxyphenyl)fluoren und 1,1-Bis-(4-hydroxyphenyl)-3,3,5-trimethylcyclohexan, sowie die Bisphenole (Ix) bis (IIIx) 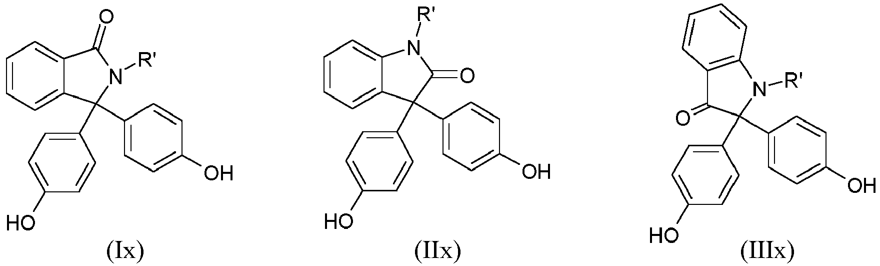 in denen R' jeweils für C₁-C₄-Alkyl, Aralkyl oder Aryl, bevorzugt für Methyl oder
Phenyl, ganz besonders bevorzugt für Methyl, steht.

Besonders bevorzugte Dihydroxyarylverbindungen sind 2,2-Bis-(4-hydroxyphenyl)-propan (Bisphenol A), 2,2-Bis-(3,5-dimethyl-4-hydroxyphenyl)-propan, 1,1-Bis-(4-hydroxyphenyl)-cyclohexan, 1,1-Bis-(4-hydroxyphenyl)-3,3,5-trimethylcyclohexan und Dimethyl-Bisphenol A sowie die Dihydroxyarylverbindungen der Formeln (Ix), (IIx) und (IIIx).

Diese und weitere geeignete Dihydroxyarylverbindungen sind z.B. in US-A 3 028 635, US-A 2 999 825, US-A 3 148 172, US-A 2 991 273, US-A 3 271 367, US-A 4 982 014 und US-A 2 999 846, in DE-A 1 570 703, DE-A 2 063 050, DE-A 2 036 052, DE-A 2 211 956 und DE-A 3 832 396, in FR-A 1 561 518, in der Monographie H. Schnell, "Chemistry and Physics of Polycarbonates", Interscience Publishers, New York 1964"beschrieben.

Ebenso bevorzugt sind Polycarbonate, für deren Herstellung eine Dihydroxyarylverbindung der folgenden Formel (1a) verwendet wurde: 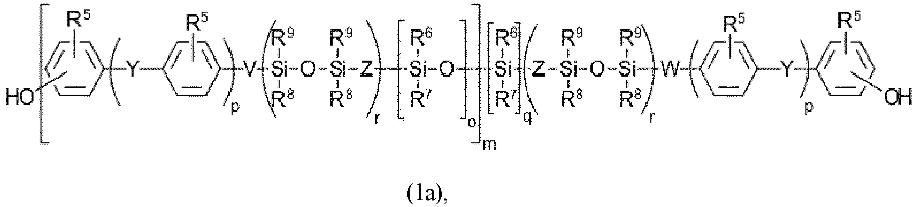 in der
R⁵ für Wasserstoff oder C1- bis C4-Alkyl, C1- bis C4-Alkoxy, vorzugsweise für Wasserstoff oder Methyl oder Methoxy, besonders bevorzugt für Wasserstoff steht,
R⁶, R⁷, R⁸ und R⁹ unabhängig voneinander für C6- bis C12-Aryl oder C1- bis C4-Alkyl, vorzugsweise Phenyl oder Methyl, insbesondere für Methyl stehen,
Y für eine Einfachbindung, SO₂-, -S-, -CO-, -O-, C1- bis C6-Alkylen, C2- bis C5-Alkyliden, C6- bis C12-Arylen, die gegebenenfalls mit weiteren aromatischen Ringen mit Heteroatomen kondensiert werden kann, oder für einen C5- bis C6-Cycloalkylidenrest, der ein- oder mehrfach mit C1- bis C4-Alkyl substituiert sein kann, steht, vorzugsweise für eine Einfachbindung, -O-, Isopropyliden oder für einen C5- bis C6-Cycloalkylidenrest, der ein- oder mehrfach mit C1 bis C4-Alkyl substituiert sein kann,
V für Sauerstoff, C2- bis C6-Alkylen oder C3- bis C6-Alkyliden, vorzugsweise für Sauerstoff oder C3-Alkylen steht,
p, q und r unabhängig voneinander jeweils für 0 oder 1 stehen,
wobei, wenn q = 0 ist, W eine Einfachbindung ist, wenn q = 1 und r = 0 ist, W für -O-, C2- bis C6-Alkylen oder C3- bis C6-Alkyliden steht, vorzugsweise für -O- oder C3-Alkylen,
wenn q = 1 und r = 1 ist, W und V unabhängig voneinander für C2- bis C6-Alkylen oder C3-bis C6-Alkyliden stehen, vorzugsweise für C3-Alkylen,
Z für C1- bis C6-Alkylen steht, vorzugsweise C2-Alkylen,
o für eine mittlere Anzahl von Wiederholungseinheiten von 10 bis 500 steht, vorzugsweise 10 bis 100 und
m für eine mittlere Anzahl von Wiederholungseinheiten von 1 bis 10 steht, vorzugsweise 1 bis 6, besonders bevorzugt 1,5 bis 5.

Es können auch Dihydroxyarylverbindungen eingesetzt werden, bei denen zwei oder mehrere Siloxanblöcke der allgemeinen Formel (1a) über Terephthalsäure und/oder Isophthalsäure unter Bildung von Estergruppen verknüpft sind.

Copolycarbonate mit Monomereinheiten der allgemeinen Formel (1a), insbesondere mit Bisphenol A, und insbesondere die Herstellung dieser Copolycarbonate sind beispielsweise in WO 2015/052106 A2 beschrieben.

Es können auch Dihydroxyarylverbindungen eingesetzt werden, bei denen zwei oder mehrere Siloxanblöcke der allgemeinen Formel (1a) über Terephthalsäure und/oder Isophthalsäure unter Bildung von Estergruppen verknüpft sind.

Die Herstellung der Polycarbonate erfolgt in bekannter Weise aus Diphenolen, Kohlensäurederivaten, gegebenenfalls Kettenabbrechern und gegebenenfalls Verzweigern, wobei zur Herstellung der Polyestercarbonate ein Teil der Kohlensäurederivate durch aromatische Dicarbonsäuren oder Derivate der Dicarbonsäuren ersetzt wird, und zwar je nach Maßgabe der in den aromatischen Polycarbonaten zu ersetzenden Carbonatstruktureinheiten durch aromatische Dicarbonsäureesterstruktureinheiten.

Im Falle der Homopolycarbonate wird nur ein Diphenol eingesetzt, im Falle von Copolycarbonaten werden zwei oder mehr Diphenole eingesetzt. Die verwendeten Diphenole, wie auch alle anderen der Synthese zugesetzten Chemikalien und Hilfsstoffe, können mit den aus ihrer eigenen Synthese, Handhabung und Lagerung stammenden Verunreinigungen kontaminiert sein. Es ist jedoch wünschenswert, mit möglichst reinen Rohstoffen zu arbeiten.

Die zur Regelung des Molekulargewichtes benötigten monofunktionellen Kettenabbrecher, wie Phenole oder Alkylphenole, insbesondere Phenol, p-tert. Butylphenol, iso-Octylphenol, Cumylphenol, deren Chlorkohlensäureester oder Säurechloride von Monocarbonsäuren bzw. Gemische aus diesen Kettenabbrechern, werden entweder mit dem Bisphenolat bzw. den Bisphenolaten der Reaktion zugeführt oder aber zu jedem beliebigen Zeitpunkt der Synthese zugesetzt, solange im Reaktionsgemisch noch Phosgen oder Chlorkohlensäureendgruppen vorhanden sind, bzw. im Falle der Säurechloride und Chlorkohlensäureester als Kettenabbrecher, solange genügend phenolische Endgruppen des sich bildenden Polymers zur Verfügung stehen. Vorzugsweise werden der oder die Kettenabbrecher jedoch nach der Phosgenierung an einem Ort oder zu einem Zeitpunkt zugegeben, wenn kein Phosgen mehr vorliegt, aber der Katalysator noch nicht dosiert wurde, bzw. sie werden vor dem Katalysator, mit dem Katalysator zusammen oder parallel zudosiert. In der gleichen Weise werden eventuell zu verwendende Verzweiger oder Verzweigermischungen der Synthese zugesetzt, üblicherweise jedoch vor den Kettenabbrechern. Üblicherweise werden Trisphenole, Quarterphenole oder Säurechloride von Tri- oder Tetracarbonsäuren verwendet oder auch Gemische der Polyphenole oder der Säurechloride. Einige der als Verzweiger verwendbaren Verbindungen mit drei oder mehr als drei phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tris-(4-hydroxyphenyl)-benzol, 1,1,1-Tri-(4-hydroxyphenyl)-ethan, Tris-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, Tetra-(4-hydroxyphenyl)-methan.

Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol. Bevorzugte Verzweiger sind 3,3-Bis-(3-methyl-4-hydroxyphenyl)-2-oxo-2,3-dihydroindol und 1,1,1-Tri-(4-hydroxyphenyl)-ethan. Die Menge der gegebenenfalls einzusetzenden Verzweiger beträgt 0,05 Mol-% bis 2 Mol-%, bezogen wiederum auf Mole an jeweils eingesetzten Diphenolen. Alle diese Maßnahmen zur Herstellung der Polycarbonate sind dem Fachmann geläufig. Bevorzugte Herstellungsweisen der erfindungsgemäß zu verwendenden Polycarbonate, einschließlich der Polyestercarbonate, sind das bekannte Grenzflächenverfahren und das bekannte Schmelzeumesterungsverfahren (vgl. z. B. WO 2004/063249 A1, WO 2001/05866 A1, WO 2000/105867, US 5,340,905 A, US 5,097,002 A, US-A 5,717,057 A). Bevorzugt wird das Polycarbonat über das Schmelzeumesterungsverfahren hergestellt.

Im ersten Fall dienen als Säurederivate vorzugsweise Phosgen und gegebenenfalls Dicarbonsäuredichloride, im letzteren Fall vorzugsweise Diphenylcarbonat und gegebenenfalls Dicarbonsäurediester. Katalysatoren, Lösungsmittel, Aufarbeitung, Reaktionsbedingungen etc. für die Polycarbonatherstellung bzw. Polyestercarbonatherstellung sind in beiden Fällen hinreichend beschrieben und bekannt. Die relative Lösungsviskosität (ηᵣₑₗ) der aromatischen Polycarbonate liegt bevorzugt im Bereich 1,18 bis 1,4, besonders bevorzugt im Bereich 1,20 bis 1,32, ganz besonders bevorzugt im Bereich von 1,22 bis 1,29 (gemessen an Lösungen von 0,5 g Polycarbonat in 100 ml Methylenchlorid-Lösung bei 25°C). Das gewichtsgemittelte Molekulargewicht Mw der aromatischen Polycarbonate und Polyestercarbonate liegt bevorzugt im Bereich von 15.000 bis 35.000, weiter bevorzugt im Bereich von 20.000 bis 33.000, besonders bevorzugt 23.000 bis 30.000, bestimmt durch. Die Werte für Mw werden dabei durch Gelpermeationschromatographie bestimmt, kalibriert gegen Bisphenol-A-Polycarbonatstandards unter Verwendung von Dichlormethan als Elutionsmittel, Kalibrierung mit linearen Polycarbonaten (aus Bisphenol-A und Phosgen) bekannter Molmassenverteilung der Firma PSS Polymer Standards Service GmbH, Deutschland; Eichung nach dem Verfahren 2301-0257502-09D (2009 Edition) der Currenta GmbH & Co. OHG, Leverkusen. Das Elutionsmittel ist Dichlormethan. Säulenkombination von vernetzten Styrol-Divinylbenzolharzen. Durchmesser der Analysesäulen: 7.5 mm; Länge: 300 mm. Partikelgrößen des Säulenmaterials: 3 µm bis 20 µm. Konzentration der Lösungen: 0,2 Gew.-%. Durchflussmenge: 1,0 ml/min, Temperatur der Lösungen: 30°C Detektion mit einem Brechungsindexdetektor (RI).

Bevorzugt weist das aromatische Polycarbonat der Komponente A einen phenolischen OH-Gehalt von 230 ppm bis 1500 ppm, bevorzugt von 260 ppm bis 1300 ppm, besonders bevorzugt von 300 ppm bis 1000 ppm, ebenso besonders bevorzugt von 310 ppm bis 800 ppm und ganz besonders bevorzugt von 350 ppm bis 790 ppm auf. Es wurde gefunden, dass, wenn das Polycarbonat eine OH-Zahl in diesem Bereich aufweist, sowohl die Verbundhaftung verbessert wird, aber gleichzeitig auch die Thermostabilität des Trägermaterials gewährleistet ist.

Dem Fachmann ist bekannt, wie er den phenolischen OH-Gehalt von aromatischen Polycarbonaten bestimmen kann. Dazu bieten sich die Methoden der ¹H-NMR-Spektroskopie oder auch Infrarot-Techniken an. Bevorzugt wird der phenolische OH-Gehalt mittels ¹-H-NMR-Spektroskopie bestimmt. Handelt es sich bei dem aromatischen Polycarbonat beispielsweise um Polycarbonat auf Basis von Bisphenol A, wird der Gehalt an OH-Endgruppen mittels ¹H-NMR-Spektroskopie mit Dichlormethan als Lösungsmittel bei Raumtemperatur unter Auswertung des Verhältnisses der Integrale der Signale bei 6,68 ppm (zwei aromatische Protonen ortho-ständig zu phenolischen OH-Gruppen) und bei 1,68 ppm (sechs Methylprotonen der Bisphenol-A Einheit) ermittelt. Wird ein (Co)Polycarbonat auf Basis eines anderen Bisphenols / mit von Bisphenol A verschiedenen weiteren Comonomeren verwendet, so ist der Fachmann in der Lage, den phenolischen OH-Gehalt zu bestimmen.

Soweit nicht anders angegeben, beziehen sich die ppm-Angaben auf das Gewicht. Dem Fachmann ist grundsätzlich bekannt, wie er den phenolischen OH-Gehalt eines Polycarbonats einstellen/beeinflussen kann. Wird das Phasengrenzflächenverfahren verwendet, kann der Fachmann beispielsweise durch die Konzentration des Kettenabbrechers oder die Verwendung spezieller Kettenabbrecher, welche ggf. auch phenolische OH-Gruppen enthalten, oder aber einer anschließenden Reaktion der Endgruppen mit Verbindungen, welche phenolische OH-Gruppen enthalten, die erfindungsgemäß gewünschte Konzentration an phenolischem OH einstellen. Wird das Schmelzeumesterungsverfahren zur Herstellung des Polycarbonats verwendet, so weiß der Fachmann, dass der verwendete Katalysator oder das Verhältnis von Diarylcarbonat zu dem verwendeten Bisphenol Einfluss auf den phenolischen OH-Gehalt nehmen kann. Auch hier ist es möglich, dass in einem nachgelagerten Schritt, das vorhandene Polycarbonat an den Endgruppen so modifiziert werden kann, dass gezielt phenolische OH-Gruppen eingeführt werden oder abreagiert werden.

Insbesondere ist das erfindungsgemäße Verfahren dadurch gekennzeichnet, dass das aromatische Polycarbonat der Komponente A) eine, besonders bevorzugt mehrere der folgenden Strukturen (4) bis (7) umfasst: 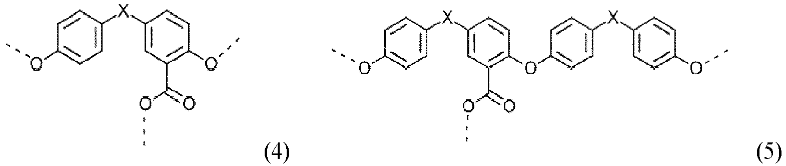 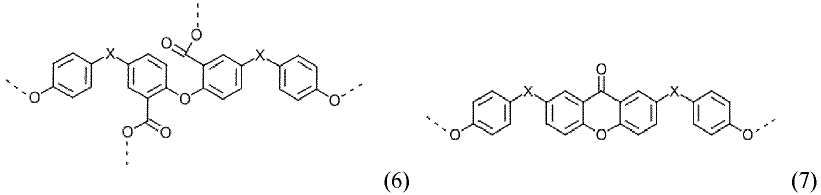 in denen die Phenylringe unabhängig voneinander ein- oder zweifach mit C₁ bis C₈ Alkyl, Halogen, bevorzugt C₁ bis C₄ Alkyl, besonders bevorzugt mit Methyl substituiert sein können und X für eine Einfachbindung, eine lineare oder verzweigte C₁ bis C₆ Alkylen-Gruppe, eine C₂ bis C₁₀ Alkylidengruppe, oder eine C₅ bis C₁₀ Cycloalkylidengruppe, bevorzugt für eine Einfachbindung oder C₁ bis C₄ Alkylen und insbesondere bevorzugt für Isopropyliden stehen und die "- - -" für die Anbindung der Strukturen (4) bis (7) ins aromatische Polycarbonat stehen. Dabei ist es insbesondere bevorzugt, dass die Menge der Struktureinheiten (4) bis (7) in Summe 10 ppm bis 1000 ppm, bevorzugt 50 bis 950 ppm, besonders bevorzugt 80 ppm bis 850 ppm beträgt.

Um die Menge Struktureinheiten (4) bis (7) zu bestimmen, wird das jeweilige Polycarbonat einer Totalverseifung unterzogen und die Menge der Abbauprodukte mit quantitativer HPLC bestimmt wird. Die Abbauprodukte können dabei die Strukturen (4a) bis (7a) aufweisen. Die Strukturen (4a) bis (7a) sind dabei beispielhaft für die Verwendung eines Polycarbonats, umfassend Bisphenol A, angegeben. (Dies kann z.B. wie folgt geschehen: Die Polycarbonatprobe wird mittels Natriummethylat unter Rückfluss verseift. Die entsprechende Lösung wird angesäuert und zur Trockne eingeengt. Der Trocknungsrückstand wird in Acetonitril gelöst und die phenolischen Verbindungen der Formel (4a) bis (7a) mittels HPLC mit UV-Detektion bestimmt):

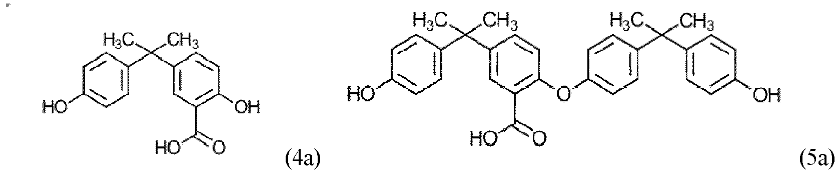

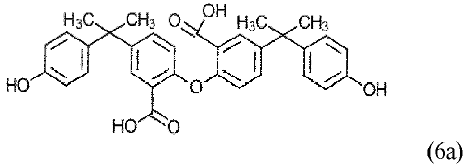

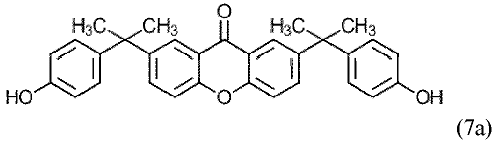

Bevorzugt beträgt die Menge der dabei freigesetzten Verbindung der Formel (4a) 10 bis 800 ppm, besonders bevorzugt 20 bis 750 ppm, besonders bevorzugt 25 bis 700 ppm und insbesondere bevorzugt 30 bis 500 ppm. Bevorzugt beträgt die Menge der dabei freigesetzten Verbindung der Formel (5a) 0 (d.h. unterhalb der Nachweisgrenze von 10 ppm) bis 100 ppm besonders bevorzugt 0 bis 80 ppm und insbesondere bevorzugt 0 bis 50 ppm. Bevorzugt beträgt die Menge der dabei freigesetzten Verbindung der Formel (6a) 0 (d.h. unterhalb der Nachweisgrenze von 10 ppm) bis 800 ppm weiter bevorzugt 10 bis 700 ppm und besonders bevorzugt 20 bis 600 ppm sowie ganz besonders bevorzugt 30 bis 350 ppm. Bevorzugt beträgt die Menge der dabei freigesetzten Verbindung der Formel (7a) 0 (d.h. unterhalb der Nachweisgrenze von 10 ppm) bis 300 ppm bevorzugt 5 bis 250 ppm und insbesondere bevorzugt 10 bis 200 ppm.

### Komponente B

Erfindungsgemäß enthält die thermoplastische Zusammensetzung eine Hydroxylkomponente (I), umfassend mindestens drei Kohlenstoffatome und mindestens drei Hydroxylgruppen, wobei mindestens eine dieser mindestens drei Hydroxylgruppen jeweils mit einer aliphatischen gesättigten oder ungesättigten, linearen, cyclischen oder verzweigten C₁-C₃₂-Carbonsäure oder Benzoesäure verestert ist und mindestens eine dieser mindestens drei Hydroxylgruppen als freie Hydroxylgruppe vorliegt. Wie bereits oben beschrieben, führt die chemische Natur dieser Hydroxylkomponente dazu, dass sie über die hydrophilen Hydroxylgruppen an die Polyurethanschicht anbinden kann und dabei die hydrophoben Kohlenwasserstoffe fest im Trägermaterial verankert sind.

Bevorzugt wird die Hydroxylkomponente (I) dargestellt durch die Strukturformel (I)

(R₄-C(=O)O)ₒ-(R₅)ₓ-(OH)ₚ (I),

worin
jedes R₄ unabhängig voneinander ein aliphatischer gesättigter oder ungesättigter, linearer, cyclischer oder verzweigter C₁-C₃₁-Alkylrest oder Phenyl ist,
R₅ eine lineare, cyclische oder verzweigte Alkylengruppe mit x Kohlenstoffatomen ist, wobei x 3 bis 12, bevorzugt 3 bis 8, besonders bevorzugt 3 bis 7, ganz besonders bevorzugt 3 bis 5 ist und jedes dieser in R₅ enthaltenen Kohlenstoffatome jeweils die Substituenten (R₄-C(=O)O)ₒ-, -(OH)ₚ und/oder Wasserstoff oder einen Alkylrest aufweisen kann und
o eine Zahl von 1 bis 12 ist und p eine Zahl von 1 bis 12 ist, unter der Voraussetzung, dass o + p 2 bis 12 ist und das Maximum von o + p bestimmt wird durch die maximale Anzahl x der Kohlenstoffatomen in R₅.

Dabei ist dem Fachmann ersichtlich, dass nur so viele Substituenten in der Formel (I) vorliegen, wie auch Valenzen des Kohlenstoffs zur Verfügung stehen. Weist eine verzweigte R₅-Alkylengruppe beispielsweise mindestens ein tertiäres Kohlenstoff auf, so hat dieses tertiäre Kohlenstoffatom somit höchstens noch eine Valenz für einen der Substituenten R₄-C(=O)O)ₒ-, -(OH)ₚ und/oder Wasserstoff zur Verfügung. Ebenso kann eine verzweigte R₅-Alkylengruppe ein quartäres Kohlenstoffatom aufweisen, welches keine Valenz für einen weiteren Substituenten aufweist.

Ebenso ist es bevorzugt, dass die Hydroxylkomponente (I) dargestellt wird durch die Strukturformel (Ia) oder (Ib) 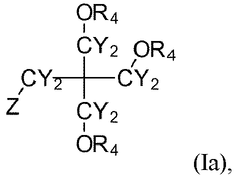 worin jedes R₄ unabhängig voneinander für Wasserstoff, einen aliphatischen gesättigten oder ungesättigten, linearen, cyclischen oder verzweigten C₁-C₃₁-Alkylrest oder Phenyl steht, unter der Bedingungen, dass mindestens ein R₄ Wasserstoff ist und mindestens ein R₄ ein aliphatischer gesättigter oder ungesättigter, linearer, cyclischer oder verzweigter C₁-C₃₁-Alkylrest oder Phenyl ist,
jedes Y unabhängig voneinander für Wasserstoff, einen Alkyl- oder Arylrest steht und
Z für Wasserstoff, einen Alkylrest oder OR₄ steht, 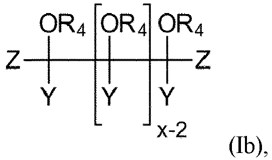 worin jedes R₄ unabhängig voneinander für Wasserstoff, einen aliphatischen gesättigten oder ungesättigten, linearen, cyclischen oder verzweigten C₁-C₃₁-Alkylrest oder Phenyl steht, unter der Bedingungen, dass mindestens ein R₄ Wasserstoff ist und mindestens ein R₄ ein aliphatischer gesättigter oder ungesättigter, linearer, cyclischer oder verzweigter C₁-C₃₁-Alkylrest oder Phenyl ist,
jedes Y unabhängig voneinander für Wasserstoff, einen Alkyl- oder Arylrest steht,
Z für Wasserstoff oder einen Alkylrest steht und
x für eine Zahl zwischen 3 bis 12, bevorzugt 3 bis 8, besonders bevorzugt 3 bis 7, ganz besonders bevorzugt 3 bis 5 steht.

Insbesondere ist es bevorzugt, dass x in Strukturformel (I) oder (Ib) für 3 bis 5 steht.

Dabei ist es insbesondere bevorzugt, dass jedes R₄ in Strukturformel (I), (Ia) oder (Ib) unabhängig voneinander für Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl, Cyclohexyl, Cyclopentyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, 1-Ethyl-2-methylpropyl, n-Heptyl, n-Octyl, Pinakyl, Adamantyl, die isomeren Menthyle, n-Nonyl, n-Decyl, n-Dodecyl, n-Tridecyl, n-Tetradecyl, n-Hexadecyl oder n-Octadecyl steht. Besonders bevorzugt, steht jedes R₄ in Strukturformel (I), (Ia) oder (Ib) unabhängig voneinander für n-Nonyl, n-Decyl, n-Dodecyl, n-Tridecyl, n-Tetradecyl, n-Hexadecyl oder n-Octadecyl.

Ebenso bevorzugt, insbesondere bevorzugt in Kombination mit den oben beschriebenen Bedeutungen für R₄, ist, dass jedes Y in Strukturformel (I), (Ia) oder (Ib) unabhängig voneinander für Wasserstoff, Methyl, Ethyl, Propyl, Butyl oder Phenyl steht. Besonders bevorzugt ist Komponente B) Glycerinmonostearat.

Die thermoplastische Zusammensetzung umfasst bevorzugt 0,0001 bis 5 Gew.-%, besonders bevorzugt 0,001 bis 1 Gew.-%, ganz besonders bevorzugt 0,01 bis 0,8 Gew.-% und am bevorzugsten 0,02 bis 0,06 Gew.-% der Komponente B). Diese Mengen stellen sicher, dass der Effekt der verbesserten Verbundhaftung eintritt, aber gleichzeitig die Menge so gering ist, dass die Bulk-Eigenschaften des Trägers kaum verändert werden.

### Komponente C

Die Zusammensetzung kann als Komponente C Polymeradditive enthalten. Als Polymeradditive kommen insbesondere handelsübliche Polymeradditive in Betracht. Bevorzugte Polymeradditive gemäß Komponente C sind Flammschutzmittel, Flammschutzsynergiste, rauchhemmenden Additive, Antidrippingmittel, interne und externe Gleit- und Entformungsmittel, Fließfähigkeitshilfsmittel, Antistatika, Leitfähigkeitsadditive, Nukleirmittel, Stabilisatoren, antibakteriell wirkende Additive, kratzfestigkeitsverbessernde Additive, IR-Absorbentien, optische Aufheller, fluoreszierende Additive, Füll- und Verstärkungsstoffe, Farbstoffe und Pigmente und Brönsted-saure Verbindungen. Insbesondere bevorzugt sind Polymeradditive wie Flammschutzmittel (beispielsweise Phosphorverbindungen wie Phosphor- oder Phosphonsäureester, Phosphonatamine und Phosphazene oder Halogenverbindungen), Flammschutzsynergisten (beispielsweise nanoskalige Metalloxide), rauchhemmende Additive (beispielsweise Borsäure oder Borate), Antidrippingmittel (beispielsweise Verbindungen der Substanzklassen der fluorierten Polyolefine, der Silikone sowie Aramidfasern), interne und externe Gleit- und Entformungsmittel (beispielsweise Pentaerythrittetrastearat, Stearylstearat, Montanwachs oder Polyethylenwax), Fließfähigkeitshilfsmittel (beispielsweise niedermolekulare Vinyl(co)polymerisate), Antistatika (beispielsweise Blockcopolymere aus Ethylenoxid und Propylenoxid, andere Polyether oder Polyhydroxyether, Polyetheramide, Polyesteramide oder Sulfonsäuresalze), Leitfähigkeitsadditive (beispielsweise Leitruß oder Carbon Nanotubes), Nukleirmittel, Stabilisatoren (beispielsweise UV/Licht-Stabilisatoren, Thermostabilisatoren, Antioxidantien, Umesterungsinhibitoren, Hydrolyseschutzmittel), antibakteriell wirkende Additive (beispielsweise Silber oder Silbersalze), kratzfestigkeitsverbessernde Additive (beispielsweise Silikonöle oder harte Füllstoffe wie Keramik(hohl)kugeln), IR-Absorbentien, optische Aufheller, fluoreszierende Additive, Füll- und Verstärkungsstoffe (beispielsweise Talk, ggf. gemahlene Glas- oder Karbonfasern, Glas- oder Keramik(hohl)kugeln, Glimmer, Kaolin, CaCO₃ und Glasschuppen) sowie Farbstoffe und Pigmente (beispielsweise Ruß, Titandioxid oder Eisenoxid), Schlagzähigkeitsmodifikatoren, und Brönsted-saure Verbindungen als Basenfänger, oder aber Mischungen mehrerer der genannten Additive in Frage.

Erfindungsgemäß sind die in Bezug auf die thermoplastische Zusammensetzung angegebenen Gewichtsprozente so zu verstehen, dass sie sich auf das Gesamtgewicht der thermoplastischen Zusammensetzung beziehen. Es ist bevorzugt, dass die thermoplastische Zusammensetzung mindestens 50 Gew.-% A), 0,01 bis 5,0 Gew.-% B) und 0 bis 4,99 Gew-% C) umfasst. Besonders bevorzugt umfasst die thermoplastische Zusammensetzung mindestens 60 Gew.-% A), 0,01 bis 5,0 Gew.-% B) und 0 bis 4,99 Gew-% C). Ebenso ist es bevorzugt, dass die thermoplastische Zusammensetzung mindestens 95 Gew.-% A), 0,01 bis 5,0 Gew.-% B) und 0 bis 4,99 Gew-% C) umfasst. Ganz besonders bevorzugt umfasst die thermoplastische Zusammensetzung mindestens 95,0 Gew.-% der Komponente A), 0,01 bis < 5,0 Gew.-% der Komponente B) und > 0 Gew.-% bis 4,99 Gew.-% der Komponente C), besonders bevorzugt mindestens 95,0 Gew.-% der Komponente A), 0,01 bis 4,99 Gew.-% der Komponente B) und 0,01 bis 4,99 Gew.-% der Komponente C), ganz besonders bevorzugt mind. 96,0 Gew.-% der Komponente A), 0,01 bis 3,95 Gew.-% der Komponente B) und 0,05 Gew.-% bis 3,99 Gew.-% der Komponente C) und insbesondere bevorzugt mind. 96,0 Gew.-% der Komponente A), 0,01 bis 1,00 Gew.-% der Komponente B) und 3,00 Gew.-% bis 3,99 Gew.-% der Komponente C)

Bevorzugt besteht die thermoplastische Zusammensetzung im Wesentlichen aus den Komponenten A) ,B) und gegebenenfalls C). Ganz besonders bevorzugt besteht die thermoplastische Zusammensetzung aus den Komponenten A), B) und gegebenenfalls C).

Bevorzugt wird als Komponente C) zumindest ein Thermostabilisator in der thermoplastischen Zusammensetzung eingesetzt. Als Thermostabilisatoren sind insbesondere Phosphor-basierte Stabilisatoren, ausgewählt aus der Gruppe der Phosphate, Phosphite, Phosphonite, Phosphine und deren Mischungen, geeignet. Beispiele sind Trisisooctylphosphat, Triphenylphosphit, Diphenylalkylphosphit, Phenyldialkylphosphit, Tris(nonylphenyl)phosphit, Trilaurylphosphit, Trioctadecylphosphit, Distearylpentaerythritoldiphosphit, Tris(2,4-di-tert-butylphenyl)phosphit (Irgafos 168), Diisodecylpentaerythritoldiphosphit, Bis(2,4-di-tert-butylphenyl)pentaerythritoldiphosphit, Bis(2,4-di-cumylphenyl)pentaerythritoldiphosphit (Doverphos S-9228), Bis(2,6-di-tert-butyl-4-methylphenyl)penta-erythritol-diphosphit, Diisodecyloxypentaerythritoldiphosphit, Bis(2,4-di-tert-butyl-6-methylphenyl)-pentaerythritoldiphosphit, Bis(2,4,6-tris(tert-butylphenyl)pentaerythritoldiphosphit, Tristearylsorbitoltriphosphit, Tetrakis(2,4-di-tert-butylphenyl)-4,4'-biphenylendiphosphonit, 6-Isooctyloxy-2,4,8,10-tetra-tert-butyl-12H-dibenz[d,g]-1,3,2-dioxaphosphocin, Bis(2,4-di-tert-butyl-6-methylphenyl)methylphosphit, Bis(2,4-di-tert-butyl-6-methylphenyl)ethylphosphit, 6-Fluoro-2,4,8,10-tetra-tert-butyl-12-methyl-dibenz[d,g]-1,3,2-dioxaphosphocin, 2,2',2"-Nitrilo-[triethyltris(3,3',5,5'-tetra-tert-butyl-1,1'-biphenyl-2,2'-diyl)phosphit], 2-Ethylhexyl(3,3',5,5'-tetra-tert-butyl-1,1'-biphenyl-2,2'-diyl)phosphit, 5-Butyl-5-ethyl-2-(2,4,6-tri-tert-butylphenoxy)-1,3,2-dioxaphosphiran, Bis(2,6-di-ter-butyl-4-methylphenyl)pentaerythritol-diphosphit, Triphenylphosphin (TPP), Trialkylphenylphosphin, Bisdiphenylphosphino-ethan oder ein Trinaphthylphosphin. Sie werden allein oder im Gemisch, z. B. Irganox B900 (Gemisch aus Irgafos 168 und Irganox 1076 im Verhältnis 4:1) oder Doverphos S-9228 mit Irganox B900 bzw. Irganox 1076, eingesetzt. Insbesondere bevorzugt werden Triphenylphosphin (TPP), Trisisooctylphsophat, Irgafos 168 oder Tris(nonylphenyl)phosphit oder deren Mischungen eingesetzt. Die Thermostabilisatoren werden bevorzugt in Mengen bis zu 1,0 Gew.-%, weiter bevorzugt 0,003 Gew.-% bis 1,0 Gew.-%, noch weiter bevorzugt 0,005 Gew.-% bis 0,5 Gew.-%, besonders bevorzugt 0,01 Gew.-% bis 0,2 Gew.-%, eingesetzt. Insbesondere ist es bevorzugt, wenn TPP in Mengen von 0 bis 0,1 Gew.-%, besonders bevorzugt 0,05 bis 0,08 Gew.-% und ganz besonders bevorzugt 0,01 bis 0,05 Gew.-% eingesetzt wird. Ebenso ist es bevorzugt, wenn Stabilisatoren aus der Gruppe der Phosphite in Mengen von 0,01 bis 0,1 Gew.-%, besonders bevorzugt 0,015 bis 0,09 Gew.-% und besonders bevorzugt 0,02 bis 0,08 Gew.-% eingesetzt werden.

Ferner können phenolische Antioxidantien wie alkylierte Monophenole, alkylierte Thioalkylphenole, Hydrochinone und alkylierte Hydrochinone eingesetzt werden. Besonders bevorzugt werden Irganox 1010 (Pentaerythrit-3-(4-hydroxy-3,5-di-tert-butylphenyl)propionat; CAS: 6683-19-8) und Irganox 1076 (Octadecyl-3-(3,5-di-tert-butyl-4-hydroxyphenyl)-propionat) eingesetzt. Diese werden bevorzugt in Mengen von 0,001 - 0,5 Gew-%, besonders bevorzugt 0,0025 bis 0,1 Gew.-% und ganz besonders bevorzugt 0,005 bis 0,04 Gew.-% eingesetzt.

Besonders geeignete Ultraviolett-Absorber sind Hydroxy-Benzotriazole, wie 2-(3',5'-Bis-(1,1-dimethylbenzyl)-2'-hydroxy-phenyl)-benzotriazol (Tinuvin^{®} 234, BASF SE, Ludwigshafen), 2-(2'-Hydroxy-5'-(tert.-octyl)-phenyl)-benzotriazol (Tinuvin^{®} 329, BASF SE, Ludwigshafen), Bis-(3-(2H-benztriazolyl)-2-hydroxy-5-tert.-octyl)methan (Tinuvin^{®} 360, BASF SE, Ludwigshafen), 2-(4,6-Diphenyl-1,3,5-triazin-2-yl)-5-(hexyloxy)-phenol (Tinuvin^{®} 1577, BASF SE, Ludwigshafen), 2-(5chloro-2H-benzotriazol-2-yl)-6-(1,1-dimethylethyl)-4-methylphenol (Tinuvin^{®} 326, BASF SE, Ludwigshafen), sowie Benzophenone wie 2,4-Dihydroxybenzophenon (Chimasorb^{®} 22 , BASF SE, Ludwigshafen) und 2-Hydroxy-4-(octyloxy)-benzophenon (Chimassorb^{®} 81, BASF SE, Ludwigshafen), 2,2-Bis[[(2-cyano-1-oxo-3,3-diphenyl-2-propenyl)oxy]-methyl]-1,3-propandiylester (9CI) (Uvinul 3030, BASF SE, Ludwigshafen), 2-[2-Hydroxy-4-(2-ethylhexyl)oxy]phenyl-4,6-di(4-phenyl)phenyl-1,3,5-triazine (Tinuvin^{®} 1600, BASF SE, Ludwigshafen), Tetraethyl-2,2'-(1,4-phenylen-dimethyliden)-bismalonat (Hostavin B-Cap, Clariant AG) oder N-(2-Ethoxyphenyl)-N'-(2-ethylphenyl)-ethandiamid (Tinuvin^{®} 312, CAS-Nr. 23949-66-8, BASF SE, Ludwigshafen).

Sofern UV-Absorber enthalten sind, enthält die Zusammensetzung bevorzugt Ultraviolett-Absorber in einer Menge bis 0,8 Gew.-%, bevorzugt 0,05 Gew.-% bis 0,5 Gew.-%, weiter bevorzugt 0,08 Gew.-% bis 0,4 Gew.-%, ganz besonders bevorzugt 0,1 Gew.-% bis 0,35 Gew.-%, bezogen auf die Gesamtzusammensetzung.

Besonders bevorzugt umfasst die Komponente C) mindestens einen Stabilisator, bevorzugt aus der Gruppe der Phosphite und/oder Phosphate, besonders bevorzugt eine der oben genannten Verbindungen, mindestens ein Entformungsmittel, mindestens einen UV-Absorber, mindestens ein phenolisches Antioxidans und gegebenenfalls Farbmittel (organisch) und/oder Pigmente (organische und anorganische).

Ganz besonders bevorzugt umfasst die Komponente C) TPP in Mengen von 0 bis 0,1 Gew.-%, besonders bevorzugt 0,05 bis 0,08 Gew.-% und ganz besonders bevorzugt 0,01 bis 0,05 Gew.-%, mindestens einen Stabilisator aus der Gruppe der Phosphite und/oder Phosphate in Mengen von 0,01 bis 0,1 Gew.-%, besonders bevorzugt 0,015 bis 0,09 Gew.-% und besonders bevorzugt 0,02 bis 0,08 Gew.-%, mindestens einen Ultraviolett-Absorber in einer Menge bis 0,8 Gew.-%, bevorzugt 0,05 Gew.-% bis 0,5 Gew.-%, weiter bevorzugt 0,08 Gew.-% bis 0,4 Gew.-%, ganz besonders bevorzugt 0,1 Gew.-% bis 0,35 Gew.-%, mindestens ein Entformungsmittel bis zu 0,8 Gew.-%, bevorzugt 0,05 Gew.-% bis 0,5 Gew.-%, weiter bevorzugt 0,08 Gew.-% bis 0,4 Gew.-%, ganz besonders bevorzugt 0,1 Gew.-% bis 0,35 Gew.-%.

### Polyurethane

Als Beschichtung wird vorzugsweise ein Polyurethanschaum oder eine kompakte Polyurethanschicht eingesetzt. Die erfindungsgemäß zum Einsatz kommenden Polyurethane erhält man durch Umsetzung von Polyisocyanaten mit H-aktiven polyfunktionellen Verbindungen, vorzugsweise Polyolen. Dabei werden unter dem Begriff "Polyurethan" im Rahmen dieser Erfindung auch Polyurethanharnstoffe verstanden, bei denen als H-aktive polyfunktionelle Verbindungen solche Verbindungen mit N-H-Funktionalität gegebenenfalls in Abmischung mit Polyolen zum Einsatz kommen.

Geeignete Polyisocyanate sind die dem Fachmann an sich bekannten aromatischen, araliphatischen, aliphatischen oder cycloaliphatischen Polyisocyanate einer NCO-Funktionalität von bevorzugt ≥ 2, welche auch Iminooxadiazindion-, Isocyanurat-, Uretdion-, Urethan-, Allophanat-, Biuret-, Harnstoff-, Oxadiazintrion, Oxazolidinon-, Acylharnstoff- und/oder Carbodiimid-Strukturen aufweisen können. Diese können einzeln oder in beliebigen Mischungen untereinander eingesetzt werden.

Die vorstehend genannten Polyisocyanate basieren dabei auf dem Fachmann an sich bekannten Di- bzw. Triisocyanaten mit aliphatisch, cycloaliphatisch, araliphatisch und/oder aromatisch gebundenen Isocyanatgruppen, wobei es unerheblich ist, ob diese unter Verwendung von Phosgen oder nach phosgenfreien Verfahren hergestellt wurden. Beispiele für solche Di- bzw. Triisocyanate sind 1,4-Diisocyanatobutan, 1,5-Diisocyanatopentan, 1,6-Diisocyanatohexan (HDI), 2-Methyl-1,5-diisocyanatopentan, 1,5-Diisocyanato-2,2-dimethylpentan, 2,2,4-bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan (Desmodur^{®} W, Covestro AG, Leverkusen, DE), 4-Isocyanatomethyl-1,8-octandiisocyanat (Triisocyanatononan, TIN), ω,ω'-Diisocyanato-1,3-dimethylcyclohexan (H₆XDI), 1-Isocyanato-1-methyl-3-isocyanato-methylcyclohexan, 1-Isocyanato-1-methyl-4-isocyanato-methylcyclohexan, Bis-(isocyanatomethyl)-norbornan, 1,5-Naphthalen-diisocyanat, 1,3-und 1,4-Bis-(2-isocyanato-prop-2-yl)-benzol (TMXDI), 2,4- und 2,6-Diisocyanatotoluol (TDI) insbesondere das 2,4 und das 2,6-Isomere und technische Gemische der beiden Isomeren, 2,4'- und 4,4'-Diisocyanatodiphenylmethan (MDI), polymeres MDI (pMDI) 1,5-Diisocyanatonaphthalin, 1,3-Bis(isocyanato-methyl)benzol (XDI) sowie beliebige Mischungen genannter Verbindungen.

Bevorzugt weisen die Polyisocyanate dabei eine mittlere NCO-Funktionalität von 2,0 bis 5,0, bevorzugt von 2,2 bis 4,5, besonders bevorzugt von 2,2 bis 2,7 und einen Gehalt an Isocyanatgruppen von 5,0 bis 37,0 Gew.-%, bevorzugt von 14,0 bis 34,0 Gew.-% auf. In einer bevorzugten Ausführungsform werden Polyisocyanate oder Polyisocyanatgemische der vorstehend genannten Art mit ausschließlich aliphatisch und/oder cycloaliphatisch gebundenen Isocyanatgruppen eingesetzt. Ganz besonders bevorzugt basieren die Polyisocyanate der vorstehend genannten Art auf Hexamethylendiisocyanat, Isophorondiisocyanat, den isomeren Bis-(4,4'-isocyanatocyclohexyl)methanen sowie deren Mischungen.

Unter den höhermolekularen, modifizierten Polyisocyanaten sind insbesondere die aus der Polyurethanchemie bekannten Prepolymeren mit endständigen Isocyanatgruppen des Molekulargewichtsbereichs 400 bis 15.000, vorzugsweise 600 bis 12.000 von Interesse. Diese Verbindungen werden in an sich bekannter Weise durch Umsetzung von überschüssigen Mengen an einfachen Polyisocyanaten der beispielhaft genannten Art mit organischen Verbindungen mit mindestens zwei gegenüber Isocyanatgruppen reaktionsfähigen Gruppen, insbesondere organischen Polyhydroxylverbindungen hergestellt. Geeignete derartige Polyhydroxylverbindungen sind sowohl einfache mehrwertige Alkohole des Molekulargewichtsbereichs 82 bis 599, vorzugsweise 62 bis 200, wie z.B. Ethylenglykol, Trimethylolpropan, Propandiol-1,2 oder Butandiol-1,4 oder Butandiol-2,3, insbesondere jedoch höhermolekulare Polyetherpolyole und/oder Polyesterpolyole der aus der Polyurethanchemie an sich bekannten Art mit Molekulargewichten von 600 bis 12.000, vorzugsweise 800 bis 4.000, die mindestens zwei, in der Regel 2 bis 8, vorzugsweise aber 2 bis 6 primäre und/oder sekundäre Hydroxylgruppen aufweisen. Selbstverständlich können auch solche NCO-Prepolymere eingesetzt werden, die beispielsweise aus niedermolekularen Polyisocyanaten der beispielhaft genannten Art und weniger bevorzugten Verbindungen mit gegenüber Isocyanatgruppen reaktionsfähigen Gruppen wie z.B. Polythioetherpolyolen, Hydroxylgruppen aufweisenden Polyacetalen, Polyhydroxypolycarbonaten, Hydroxylgruppen aufweisenden Polyesteramiden oder Hydroxylgruppen aufweisenden Copolymerisaten olefinisch ungesättigter Verbindungen erhalten worden sind.

Zur Herstellung der NCO-Prepolymeren geeignete Verbindungen mit gegenüber Isocyanatgruppen reaktionsfähigen Gruppen, insbesondere Hydroxylgruppen, sind beispielsweise die in der US-A 4 218 543 offenbarten Verbindungen. Bei der Herstellung der NCO-Prepolymeren werden diese Verbindungen mit gegenüber Isocyanatgruppen reaktionsfähigen Gruppen mit einfachen Polyisocyanaten der oben beispielhaft genannten Art unter Einhaltung eines NCO-Überschusses zur Umsetzung gebracht. Die NCO-Prepolymeren weisen im allgemeinen einen NCO-Gehalt von 10 bis 26 vorzugsweise 15 bis 26 Gew.% auf. Hieraus geht bereits hervor, dass im Rahmen der vorliegenden Erfindung unter "NCO-Prepolymeren" bzw. unter "Prepolymeren mit endständigen Isocyanatgruppen" sowohl die Umsetzungsprodukte als solche als auch die Gemische mit überschüssigen Mengen an nicht umgesetzten Ausgangspolyisocyanaten, die oft auch als "Semiprepolymere" bezeichnet werden, zu verstehen sind.

Als aliphatische Diole mit einer OH-Zahl von >500 mg KOH/g kommen die üblicherweise in der Polyurethanchemie vernetzenden Kettenverlängerer in Betracht wie Ethylenglykol, Diethylenglykol, Propylenglykol, Dipropylenglykol, Butandiol-1,4, Propandiol-1,3. Bevorzugt sind Diole wie 2-Butandiol-1,4, Butendiol-1,3, Butandiol-2,3 und/oder 2-Methylpropandiol-1,3. Selbstverständlich ist es auch möglich, die aliphatischen Diole im Gemisch untereinander einzusetzen.

Als H-aktive Komponente eignen sich Polyole mit einer mittleren OH-Zahl von 5 bis 600 mg KOH/g und einer mittleren Funktionalität von 2 bis 6. Bevorzugt sind Polyole mit einer mittleren OH-Zahl von 10 bis 50 mg KOH/g. Erfindungsgemäß geeignete Polyole stellen beispielsweise Polyhydroxypolyether dar, die durch Alkoxylierung geeigneter Startermoleküle wie Ethylenglykol, Diethylenglykol, 1,4-Dihydroxybutan, 1,6-Dihydroxyhexan, Dimethylolpropan, Glycerin, Pentaerythrit, Sorbit oder Saccharose zugänglich sind. Als Starter können ebenfalls fungieren Ammoniak oder Amine wie Ethylendiamin, Hexamethylendiamin, 2,4-Diaminotoluol, Anilin oder Aminoalkohole oder Phenole wie Bisphenol-A. Die Alkoxylierung erfolgt unter Verwendung von Propylenoxid und/oder Ethylenoxid in beliebiger Reihenfolge oder als Gemisch.

Neben Polyolen kann zusätzlich mindestens ein weiterer Vernetzer und/oder Kettenverlängerer enthalten sein ausgewählt aus der Gruppe, die Amine und Aminoalkohole, beispielsweise Ethanolamin, Diethanolamin, Diisopropanolamin, Ethylendiamin, Triethanolamin, Isophrondiamin, N,N'-dimethyl(diethyl)-ethylendiamin, 2-amino-2-methyl (oder ethyl)-1-propanol, 2-Amino-1-butanol, 3-Amino-1,2-propandiol, 2-Amino-2-methyl(ethyl)-1,3-propandiol, und Alkohole, beispielsweise Ethylenglykol, Diethylenglykol, 1,4-Dihydroxybutan, 1,6-Dihydroxyhexan, Dimethylolpropan, Glycerin und Pentaerythrit, sowie Sorbit und Saccharose, oder Gemische dieser Verbindungen enthält.

Ferner geeignet sind Polyesterpolyole, wie sie durch Umsetzung niedermolekularer Alkohole mit mehrwertigen Carbonsäuren wie Adipinsäure, Phthalsäure, Hexahydrophthalsäure, Tetrahydrophthalsäure oder den Anhydriden dieser Säuren in an sich bekannter Weise zugänglich sind, sofern die Viskosität der H-aktiven Komponente nicht zu groß wird. Ein bevorzugtes Polyol, das Estergruppen aufweist, ist Rizinusöl. Daneben sind auch Zubereitungen mit Rizinusöl, wie sie durch Auflösung von Harzen, z.B. von Aldehyd-Keton-Harzen, erhalten werden können, sowie Modifikationen von Rizinusöl und Polyole auf Basis anderer natürlicher Öle geeignet.

Ebenfalls geeignet sind solche höhermolekularen Polyhydroxypolyether, in denen hochmolekulare Polyaddukte bzw. Polykondensate oder Polymerisate in feindisperser, gelöster oder aufgepfropfter Form vorliegen. Derartige modifizierte Polyhydroxyverbindungen werden in an sich bekannter Weise z.B. erhalten, wenn man Polyadditionsreaktionen (z.B. Umsetzungen zwischen Polyisocyanaten und aminofunktionellen Verbindungen) bzw. Polykondensationsreaktionen (z.B. zwische,n Formaldehyd und Phenolen und/oder Aminen) in situ in den Hydroxylgruppen aufweisenden Verbindungen ablaufen lässt. Es ist aber auch möglich, eine fertige wässrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie sie z.B. durch Polymerisation von Styrol und Acrylnitril in Gegenwart von Polyethern oder Polycarbonatpolyolen erhalten werden, sind für die Herstellung von Polyurethanen geeignet. Bei Verwendung von Polyetherpolyolen, welche gemäß DE-A 2 442 101, DE-A 2 844 922 und DE-A 2 646 141 durch Pfropfpolymerisation mit Vinylphosphonsäureestern sowie gegebenenfalls (Meth)acrylnitril, (Meth)acrylamid oder OH-funktionellen (Meth)acrylsäureestern modifiziert wurden, erhält man Kunststoffe von besonderer Flammwidrigkeit.

Vertreter der genannten, als H-aktiven Verbindungen zu verwendenden Verbindungen sind z.B. in High Polymers, Vol. XVI, "Polyurethanes Chemistry and Technology", Saunders-Frisch (Hrg.) Interscience Publishers, New York, London, Bd. 1, S. 32-42, 44,54 und Bd. II, 1984, s. 5-6 und S. 198-199 beschrieben. Es können auch Gemische der aufgezählten Verbindungen eingesetzt werden.

Die Begrenzung der mittleren OH-Zahl und mittleren Funktionalität der H-aktiven Komponente ergibt sich insbesondere aus der zunehmenden Versprödung des resultierenden Polyurethans. Grundsätzlich sind dem Fachmann aber die Einflussmöglichkeiten auf die polymerphysikalischen Eigenschaften des Polyurethans bekannt, so dass NCO-Komponente, aliphatisches Diol und Polyol in günstiger Weise aufeinander abgestimmt werden können.

Die Polyurethanschicht (b) kann geschäumt oder massiv, wie z.B. als Lack oder Beschichtung vorliegen.

Zu deren Herstellung können alle an sich bekannten Hilfs- und Zusatzstoffe wie z.B. Trennmittel, Treibmittel, Füllstoffe, Katalysatoren und Flammschutzmittel eingesetzt werden.

Gegebenenfalls als Hilfs- und Zusatzmittel sind dabei zu verwenden:

### a) Wasser und/oder leicht flüchtige anorganische oder organische Substanzen als Treibmittel

Als organische Treibmittel kommen z.B. Aceton, Ethylacetat, halogensubstituierte Alkane wie Methylenchlorid, Chloroform, Ethylidenchlorid, Vinylidenchlorid, Monofluortrichlormethan, Chlordifluormethan, Dichlordifluormethan, ferner Butan, Hexan, Heptan oder Diethylether, als anorganische Treibmittel Luft, CO₂ oder N₂O in Frage. Eine Treibwirkung kann auch durch Zusatz von bei Temperaturen über Raumtemperatur unter Abspaltung von Gasen, beispielsweise von Stickstoff, sich zersetzenden Verbindungen, z.B. Azoverbindungen wie Azodicarbonamid oder Azoisobuttersäurenitril, erzielt werden.

### b) Katalysatoren

Bei den Katalysatoren handelt sich beispielsweise um
tertiäre Amine (wie Triethylamin, Tributylamin, N-Methylmorpholin, N-Ethylmorpholin, N,N,N',N'-Tetramethylethylendiamin, Pentamethyldiethylentriamin und höhere Homologe, 1,4-Diazabicyclo-(2,2,2)octan, N-Methyl-N'-dimethylaminoethylpiperazin, Bis-(dimethylaminoalkyl)piperazine, N,N-Dimethylbenzylamin, N,N-Dimethylcyclohexylamin, N,N-Diethylbenzylamin, Bis-(N,N-diethylamino-ethyl)adipat, N,N,N',N'-Tetramethyl-1,3-butandiamin, N,N-Dimethyl-β-phenylethylamin, 1,2-Dimethylimidazol, 2-Methylimidazol),
monocyclische und bicyclische Amide, Bis-(dialkylamino)alkylether,
Amidgruppen (vorzugsweise Formamidgruppen) aufweisende tertiäre Amine,
Mannichbasen aus sekundären Aminen (wie Dimethylamin) und Aldehyden, (vorzugsweise Formaldehyd oder Ketonen wie Aceton, Methylethylketon oder Cyclohexanon) und Phenolen (wie Phenol, Nonylphenol oder Bisphenol),
gegenüber Isocyanatgruppen aktive Wasserstoffatome aufweisende tertiäre Amine (z.B. Triethanolamin, Triisopropanolamin, N-Methyldiethanolamin, N-Ethyldietanolamin, N,N-Dimethylethanolamin), sowie deren Umsetzungsprodukte mit Alkylenoxiden wie Propylenoxid und/oder Ehtylenoxid,
sekundärtertiäre Amine,
Silaamine mit Kohlenstoff-Silicium-Bindungen (2,2,4-Trimethyl-2-silamorpholin und 1,3-Diethylaminomethyltetramethyldisiloxan),
stickstoffhaltige Basen (wie Tetraalkylammoniumhydroxide),
Alkalihydroxide (wie Natriumhydroxid, Alkaliphenolate wie Natriumphenolat),
Alkalialkoholate (wie Natriummethylat), und/oder
Hexahydrotriazine.

Die Reaktion zwischen NCO-Gruppen und Zerewitinoff-aktiven Wasserstoffatomen wird in an sich bekannter Weise auch durch Lactame und Azalactame stark beschleunigt, wobei sich zunächst ein Assoziat zwischen dem Lactam und der Verbindung mit acidem Wasserstoff ausbildet.

Es können auch organische Metallverbindungen, insbesondere organische Zinn- und/oder Bismuthverbindungen, als Katalysatoren verwendet werden. Als organische Zinnverbindungen kommen neben schwefelhaltigen Verbindungen wie Di-n-octyl-zinnmercaptid vorzugsweise Zinn(II)-salze von Carbonsäuren wie Zinn(II)-acetat, Zinn(II)-octoat, Zinn(II)-ethylhexoat und Zinn(II)-laurat und die Zinn(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat in Betracht. Organische Bismuth-Katalysatoren werden beispielsweise in der Patentanmeldung WO 2004/000905 beschrieben.

Selbstverständlich können alle oben genannten Katalysatoren als Gemische eingesetzt werden. Von besonderem Interesse sind dabei Kombinationen aus organischen Metallverbindungen und Amidinen, Aminopyridinen oder Hydrazinopyridinen. Die Katalysatoren werden in der Regel in einer Menge von etwa 0,001 bis 10 Gew.%, bezogen auf die Gesamtmenge an Verbindungen mit mindestens zwei gegenüber Isocyanaten reaktionsfähigen Wasserstoffatomen, eingesetzt.

### c) Oberflächenaktive Zusatzstoffe wie Emulgatoren und Schaumstabilisatoren.

Als Emulgatoren kommen z.B. die Natriumsalze von Rizinusölsulfonaten oder Salze von Fettsäuren mit Aminen wie ölsaures Diethylamin oder stearinsaures Diethanolamin in Frage. Auch Alkali- oder Ammoniumsalze von Sulfonsäuren wie etwa von Dodecylbenzolsulfonsäure oder Dinaphthylmethandisulfonsäure oder von Fettsäuren wie Rizinolsäure oder von polymeren Fettsäuren können als oberflächenaktive Zusatzstoffe mitverwendet werden.

Als Schaumstabilisatoren kommen vor allem Polyethersiloxane, speziell wasserlösliche Vertreter, in Frage. Diese Verbindungen sind im allgemeinen so aufgebaut, dass ein Copolymerisat aus Ethylenoxid und Propylenoxid mit einem Polydimethylsiloxanrest verbunden ist. Von besonderem Interesse sind vielfach über Allophanatgruppen verzweigte Polysiloxan-Polyoxyalkylen-Copolymere.

### d) Reaktionsverzögerer

Als Reaktionsverzögerer kommen z.B. sauer reagierende Stoffe (wie Salzsäure oder organische Säurehalogenide) in Frage.

### e) Additive

Als PU-Additive kommen beispielsweise Zellregler der an sich bekannten Art (wie Paraffine oder Fettalkohole) oder Dimethylpolysiloxane sowie Pigmente oder Farbstoffe und Flammschutzmittel der an sich bekannten Art (z.B. Tris-chlorethylphosphat, Trikresylphosphat oder Ammoniumphosphat und -polyphosphat), ferner Stabilisatoren gegen Alterungs- und Witterungseinflüsse, Weichmacher und fungistatisch und bakteriostatisch wirkende Substanzen sowie Füllstoffe (wie Bariumsulfat, Kieselgur, Ruß oder Schlämmkreide) in Betracht. Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sind dem Fachmann bekannt und in der Literatur beschrieben.

Erfindungsgemäß ist es bevorzugt, dass ein lösemittelarmes reaktives Polyurethanrohstoffgemisch mit einem Lösungsmittelgehalt von maximal 10 Gew.-%, bevorzugt maximal 2 Gew.-%, besonders bevorzugt maximal 1 Gew.-%, bezogen auf den Lackanteil verwendet wird. Ebenso ist es bevorzugt, dass ein lösemittelfreies reaktives Polyurethanrohstoffgemischs verwendet wird. Die Anwesenheit eines Lösungsmittels kann Blasenbildung verursachen. Ebenso wird der VOC Gehalt (Volatile Organic Compound) in der Produktion erhöht. Insbesondere für die Anwendung im IMC-Verfahren und/oder RIM-Verfahren ist es vorteilhaft, lösungsmittelarme bis lösungsmittelfreie Polyurethanrohstoffgemische zu verwenden, da in diesen Prozessen in der kurzen Reaktionszeit das Lösungsmittel nicht verdampfen kann bzw. das Werkzeug verschlossen ist.

Üblicherweise werden Lacksysteme mit einer kurzen Topfzeit eingesetzt. Bevorzugt werden Systeme mit einer Topfzeit von maximal 1 min, besonders bevorzugt mit einer Topfzeit von maximal 30 s, ganz besonders bevorzugt mit einer Topfzeit von maximal 10 s gewählt. Bevorzugt wird die Zykluszeit zur Reaktion des Lacksystems an die Spritzgusszykluszeit angepasst. Dies ist besonders wirtschaftlich. Für kurze Topfzeiten wird bevorzugt ein Hochdruckgegenstrommischkopf zum Vermischen der beiden Komponenten eingesetzt. Im Vergleich zu anderen Verfahren erlaubt dies die höchste Produktivität. Außerdem verbleiben am Ende des Prozesses keine Reste von vermischten Lackrohstoffen in dem Formwerkzeug.

Ein einem weiteren Aspekt der vorliegenden Erfindung wird ein Verbundbauteil bereitgestell, umfassend
a) einen Träger aus einer Zusammensetzung enthaltend
   A) mindestens ein aromatisches Polycarbonat,
   B) mindestens eine Hydroxylkomponente (I), umfassend mindestens drei Kohlenstoffatome und mindestens drei Hydroxylgruppen, wobei mindestens eine dieser mindestens drei Hydroxylgruppen jeweils mit einer aliphatischen gesättigten oder ungesättigten, linearen, cyclischen oder verzweigten C₁-C₃₂-Carbonsäure oder Benzoesäure verestert ist und mindestens eine dieser mindestens drei Hydroxylgruppen als freie Hydroxylgruppe vorliegt, und
   C) gegebenenfalls mindestens eine Polymeradditiv,
b) mindestens eine in direkten Kontakt zum Träger stehenden Polyurethanschicht,
hergestellt in einem 2-Komponenten-Reaktivspritzgussverfahren.

Besonders bevorzugt handelt es sich dabei um einen IMC- oder RIM-Prozess. Ganz besonders bevorzugt handelt es sich dabei um einen IMC-Prozess.

Bevorzugt handelt es sich dabei um die oben beschriebenen Komponenten A), B) und C) sowie die oben beschriebene Polyurethanschicht in sämtlichen Bevorzugungen und Kombinationen von Bevorzugungen. Ebenso ist es bevorzugt, dass das erfindungsgemäße Verbundbauteil durch das erfindungsgemäße Verfahren erhalten wird.

Die Komponente B) ist im Verbundbauteil weiterhin so definiert, dass sie mindestens eine Hydroxygruppe aufweist. Es kann sein, dass der OH-Gehalt dieser Komponente durch Reaktion mit dem reaktiven Polyurethanrohstoffgemisch insbesondere an der Oberfläche des Trägers abnimmt. Jedoch werden weiterhin OH-Gruppen der Komponente B) im Träger nachweisbar sein. Besonders bevorzugt bezieht sich die Definition der Komponente B) auf die Ausgangszusammensetzung der thermoplastischen Zusammensetzung. Dem Fachmann ist jedoch ersichtlich, wie er die Anwesenheit der Komponente B) auch im resultierenden Verbundbauteil nachweisen kann. Dafür kann der Fachmann bekannte Methoden verwenden. Beispielsweise kann er die Anwesenheit der Komponente durch chromatographische Methoden bestimmen. Es ist möglich, aus einem bestehenden Verbundbauteil durch Extraktion entsprechend lösliche Komponenten zu erhalten, die dann beispielsweise über ¹H-NMR, bevorzugt aber durch HPLC-MS oder GC-MS nachgewiesen werden können.

Es ist insbesondere bevorzugt, wenn das erfindungsgemäße Verbundbauteil hergestellt wird in einem 2-Komponenten-Reaktivspritzgussverfahren mit einem reaktiven Polyurethanrohstoffgemisch enthaltend
- mindestens eine Polyisocyanat-Komponente,
- mindestens eine polyfunktionelle H-aktive Verbindung, und
- optional mindestens ein Polyurethan-Additiv und/oder Prozesshilfsstoff
wobei das reaktive Polyurethanrohstoffgemisch eine Kennzahl von > 90 bis < 140 aufweist.

Ebenso bevorzugt, handelt es sich bei dem erfindungsgemäßen Verbundbauteil um ein Innen- oder Außenbauteil eines Schienen-, Luftfahrt- oder Kraftfahrzeuges.

In einem weiteren Aspekt der vorliegenden Erfindung wird eine Verwendung einer Zusammensetzung bereitgestellt, wobei die Zusammensetzung
A) mindestens ein aromatisches Polycarbonat,
B) mindestens eine Hydroxylkomponente (I), umfassend mindestens drei Kohlenstoffatome und mindestens drei Hydroxylgruppen, wobei mindestens eine dieser mindestens drei Hydroxylgruppen jeweils mit einer aliphatischen gesättigten oder ungesättigten, linearen, cyclischen oder verzweigten C₁-C₃₂-Carbonsäure oder Benzoesäure verestert ist und mindestens eine dieser mindestens drei Hydroxylgruppen als freie Hydroxylgruppe vorliegt, und
C) gegebenenfalls mindestens eine Polymeradditiv enthält,
als Trägermaterial bei der Herstellung eines Verbundbauteils, umfassend einen Träger und mindestens eine in direkten Kontakt zum Träger stehenden Polyurethanschicht in einem 2-Komponenten-Reaktivspritzgussprozess.

Bevorzugt handelt es sich dabei um die oben beschriebenen Komponenten A), B) und C) sowie die die oben beschriebene Polyurethanschicht in sämtlichen Bevorzugungen und Kombinationen von Bevorzugungen.

## Patentansprüche

1. Verfahren zur Herstellung eines Verbundbauteils umfassend
a) einen Träger aus einer thermoplastischen Zusammensetzung, und
b) mindestens eine in direktem Kontakt zum Träger stehende Polyurethanschicht, umfassend die Schritte
(i) Einspritzen einer Schmelze der thermoplastischen Zusammensetzung
in eine Werkzeugkavität und nachfolgende Abkühlung, um den Träger zu bilden, wobei die thermoplastische Zusammensetzung
A) mindestens ein aromatisches Polycarbonat,
B) mindestens eine Hydroxylkomponente (I), umfassend mindestens drei Kohlenstoffatome und mindestens drei Hydroxylgruppen, wobei mindestens eine dieser mindestens drei Hydroxylgruppen jeweils mit einer aliphatischen gesättigten oder ungesättigten, linearen, cyclischen oder verzweigten C₁-C₃₂-Carbonsäure oder Benzoesäure verestert ist und mindestens eine dieser mindestens drei Hydroxylgruppen als freie Hydroxylgruppe vorliegt, und
C) gegebenenfalls mindestens ein Polymeradditiv, enthält,
(ii) Vergrößern der Kavität des Werkzeugs und dadurch Erzeugung eines Spaltraums oder Einbringen des Trägers in eine zweite Kavität des Werkzeugs, welche hinsichtlich ihrer Hohlformmaße größer ist als die erste Kavität, wodurch ein Spaltraum erzeugt wird,
(iii) Einspritzen eines reaktiven Polyurethanrohstoffgemisch enthaltend
- mindestens eine Polyisocyanat-Komponente,
- mindestens eine polyfunktionelle H-aktive Verbindung, und
- optional mindestens ein Polyurethan-Additiv und/oder Prozesshilfsstoff
in den Spaltraum zwischen dem Träger und der Werkzeugoberfläche, wobei das Polyurethanrohstoffgemisch im Kontakt mit der Oberfläche des Trägers zu einer kompakten Polyurethanschicht oder zu einer Polyurethanschaumschicht auspolymerisiert,
(iv) Entformen des Verbundbauteil aus der Werkzeugkavität.

2. Verfahren nach Anspruch 1, **dadurch gekennzeichnet, dass** die Hydroxylkomponente (I) dargestellt wird durch die Strukturformel (I)
(R₄-C(=O)O)ₒ-(R₅)ₓ-(OH)ₚ (I),
worin
jedes R₄ unabhängig voneinander ein aliphatischer gesättigter oder ungesättigter, linearer, cyclischer oder verzweigter C₁-C₃₁-Alkylrest oder Phenyl ist,
R₅ eine lineare, cyclische oder verzweigte Alkylengruppe mit x Kohlenstoffatomen ist, wobei x 3 bis 12 ist und jedes dieser in R₅ enthaltenen Kohlenstoffatome jeweils die Substituenten (R₄-C(=O)O)ₒ-, -(OH)ₚ und/oder Wasserstoff oder einen Alkylrest aufweisen kann und
o eine Zahl von 1 bis 12 ist und p eine Zahl von 1 bis 12 ist, unter der Voraussetzung, dass o + p 2 bis 12 ist und das Maximum von o + p bestimmt wird durch die maximale Anzahl x der Kohlenstoffatomen in R₅.

3. Verfahren nach Anspruch 1 oder 2, **dadurch gekennzeichnet, dass** die Hydroxylkomponente (I) dargestellt wird durch die Strukturformel (Ia) oder (Ib) 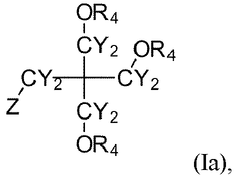 worin jedes R₄ unabhängig voneinander für Wasserstoff, einen aliphatischen gesättigten oder ungesättigten, linearen, cyclischen oder verzweigten C₁-C₃₁-Alkylrest oder Phenyl steht, unter der Bedingungen, dass mindestens ein R₄ Wasserstoff ist und mindestens ein R₄ ein aliphatischer gesättigter oder ungesättigter, linearer, cyclischer oder verzweigter C₁-C₃₁-Alkylrest oder Phenyl ist,
jedes Y unabhängig voneinander für Wasserstoff, einen Alkyl- oder Arylrest steht und
Z für Wasserstoff, einen Alkylrest oder OR₄ steht, 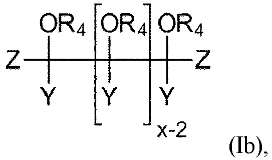 worin jedes R₄ unabhängig voneinander für Wasserstoff, einen aliphatischen gesättigten oder ungesättigten, linearen, cyclischen oder verzweigten C₁-C₃₁-Alkylrest oder Phenyl steht, unter der Bedingungen, dass mindestens ein R₄ Wasserstoff ist und mindestens ein R₄ ein aliphatischer gesättigter oder ungesättigter, linearer, cyclischer oder verzweigter C₁-C₃₁-Alkylrest oder Phenyl ist,
jedes Y unabhängig voneinander für Wasserstoff, einen Alkyl- oder Arylrest steht,
Z für Wasserstoff oder einen Alkylrest steht und
x für eine Zahl zwischen 3 bis 12 steht.

4. Verfahren nach einem der Ansprüche 2 oder 3, **dadurch gekennzeichnet, dass** jedes R₄ in Strukturformel (I), (Ia) oder (Ib) unabhängig voneinander für Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl, Cyclohexyl, Cyclopentyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, 1-Ethyl-2-methylpropyl, n-Heptyl, n-Octyl, Pinakyl, Adamantyl, die isomeren Menthyle, n-Nonyl, n-Decyl, n-Dodecyl, n-Tridecyl, n-Tetradecyl, n-Hexadecyl oder n-Octadecyl steht.

5. Verfahren nach Anspruch 4, **dadurch gekennzeichnet, dass** jedes R₄ in Strukturformel (I), (Ia) oder (Ib) unabhängig voneinander für n-Nonyl, n-Decyl, n-Dodecyl, n-Tridecyl, n-Tetradecyl, n-Hexadecyl oder n-Octadecyl steht.

6. Verfahren nach einem der Ansprüche 2 bis 5, **dadurch gekennzeichnet, dass** jedes Y in Strukturformel (I), (Ia) oder (Ib) unabhängig voneinander für Wasserstoff, Methyl, Ethyl, Propyl, Butyl oder Phenyl steht.

7. Verfahren nach einem der Ansprüche 2 bis 6, **dadurch gekennzeichnet, dass** x in Strukturformel (I) oder (Ib) für 3 bis 5 steht.

8. Verfahren nach einem der Ansprüche 1 bis 7, **dadurch gekennzeichnet, dass** Komponente B) Glycerinmonostearat ist.

9. Verfahren nach einem der Ansprüche 1 bis 8, **dadurch gekennzeichnet, dass** die thermoplastische Zusammensetzung mindestens 95 Gew.-% A), 0,01 bis 5,0 Gew.-% B) und 0 bis 4,99 Gew-% C) umfasst.

10. Verfahren nach einem der Ansprüche 1 bis 9, **dadurch gekennzeichnet, dass** das aromatische Polycarbonat der Komponente A) einen phenolischen OH-Gehalt von 230 ppm bis 1500 ppm aufweist.

11. Verfahren nach einem der Ansprüche 1 bis 10, **dadurch gekennzeichnet, dass** Komponente C) ausgewählt wird aus der Gruppe bestehend aus mindestens einem Vertreter der Gruppe bestehend aus Flammschutzmitteln, Flammschutzsynergisten, rauchhemmenden Additiven, Antidrippingmitteln, internen und externen Gleit- und Entformungsmitteln, Fließfähigkeitshilfsmitteln, Antistatika, Leitfähigkeitsadditiven, Nukleirmitteln, Stabilisatoren, antibakteriell wirkenden Additiven, kratzfestigkeitsverbessernden Additiven, IR-Absorbentien, optischen Aufhellern, fluoreszierenden Additiven, Füll- und Verstärkungsstoffen, Farbstoffen und Pigmenten und Brönsted-sauren Verbindungen.

12. Verfahren nach einem der Ansprüche 1 bis 11, **dadurch gekennzeichnet, dass** ein lösemittelarmes reaktives Polyurethanrohstoffgemisch mit einem Lösungsmittelgehalt von maximal 10 Gew.-%, bevorzugt maximal 2 Gew.-%, besonders bevorzugt maximal 1 Gew.-%, bezogen auf den Lackanteil verwendet wird.

13. Verbundbauteil umfassend
a) einen Träger aus einer Zusammensetzung enthaltend
A) mindestens ein aromatisches Polycarbonat,
B) mindestens eine Hydroxylkomponente (I), umfassend mindestens drei Kohlenstoffatome und mindestens drei Hydroxylgruppen, wobei mindestens eine dieser mindestens drei Hydroxylgruppen jeweils mit einer aliphatischen gesättigten oder ungesättigten, linearen, cyclischen oder verzweigten C₁-C₃₂-Carbonsäure oder Benzoesäure verestert ist und mindestens eine dieser mindestens drei Hydroxylgruppen als freie Hydroxylgruppe vorliegt, und
C) gegebenenfalls mindestens eine Polymeradditiv,
b) mindestens eine in direkten Kontakt zum Träger stehenden Polyurethanschicht,
hergestellt in einem 2-Komponenten-Reaktivspritzgussverfahren.

14. Verbundbauteil nach Anspruch 13, **dadurch gekennzeichnet**, es ein Innen- oder Außenbauteil eines Schienen-, Luftfahrt- oder Kraftfahrzeuges ist.

15. Verwendung einer Zusammensetzung enthaltend
A) mindestens ein aromatisches Polycarbonat,
B) mindestens eine Hydroxylkomponente (I), umfassend mindestens drei Kohlenstoffatome und mindestens drei Hydroxylgruppen, wobei mindestens eine dieser mindestens drei Hydroxylgruppen jeweils mit einer aliphatischen gesättigten oder ungesättigten, linearen, cyclischen oder verzweigten C₁-C₃₂-Carbonsäure oder Benzoesäure verestert ist und mindestens eine dieser mindestens drei Hydroxylgruppen als freie Hydroxylgruppe vorliegt, und
C) gegebenenfalls mindestens eine Polymeradditiv,
als Trägermaterial bei der Herstellung eines Verbundbauteils, umfassend einen Träger und mindestens eine in direkten Kontakt zum Träger stehenden Polyurethanschicht in einem 2-Komponenten-Reaktivspritzgussprozess.
